(19) Europäisches Patentamt / European Patent Office / Office européen des brevets

(11) **EP 3 897 890 B1**

(12) **EUROPEAN PATENT SPECIFICATION**

(45) Date of publication and mention
of the grant of the patent:
**23.04.2025 Bulletin 2025/17**

(21) Application number: **19917067.1**

(22) Date of filing: **28.02.2019**

(51) International Patent Classification (IPC):
$G06F\ 3/01^{(2006.01)}$     $A63F\ 13/212^{(2014.01)}$
$G06N\ 20/00^{(2019.01)}$     $G06F\ 18/2135^{(2023.01)}$
$G06F\ 18/2411^{(2023.01)}$     $G06V\ 40/10^{(2022.01)}$

(52) Cooperative Patent Classification (CPC):
**G06N 20/00; G06F 3/015; G06F 3/017;
G06F 18/2135; G06F 18/2411; G06V 40/113**

(86) International application number:
**PCT/US2019/020065**

(87) International publication number:
**WO 2020/176106 (03.09.2020 Gazette 2020/36)**

(54) **METHODS AND APPARATUS FOR UNSUPERVISED MACHINE LEARNING FOR CLASSIFICATION OF GESTURES AND ESTIMATION OF APPLIED FORCES**

VERFAHREN UND VORRICHTUNG FÜR UNÜBERWACHTES MASCHINELLES LERNEN ZUR KLASSIFIZIERUNG VON GESTEN UND SCHÄTZUNG VON ANGEWANDTEN KRÄFTEN

PROCÉDÉS ET APPAREIL D'APPRENTISSAGE MACHINE NON SUPERVISÉ POUR LA CLASSIFICATION DE GESTES ET L'ESTIMATION DE FORCES APPLIQUÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.10.2021 Bulletin 2021/43**

(73) Proprietor: **Meta Platforms Technologies, LLC
Menlo Park, CA 94025 (US)**

(72) Inventor: **BARACHANT, Alexandre
New York, New York 10018 (US)**

(74) Representative: **Murgitroyd & Company
165-169 Scotland Street
Glasgow G5 8PL (GB)**

(56) References cited:
**US-A1- 2009 327 171     US-A1- 2015 323 998
US-A1- 2017 061 817     US-A1- 2017 259 167**

## Description

BACKGROUND

Systems that utilize machine learning techniques to recognize and model gestures performed by a user typically require large sets of labeled data or training samples, which are labeled by humans and susceptible to human bias or labeling errors. For example, in an image recognition context, a supervised learning model is trained to recognize gestures based on labeled data, such as, multiple images capturing different angles for a particular gesture, where the images are labeled by humans to indicate the angles, types, and other aspects of the gesture.

US patent application no. US 2015/323998 A1 discloses a wearable electronic device that may include one or more sensors capable of detecting movements of muscles and tendons in the user's wrist. Sensors may be included for detecting spatial movement of the wearable electronic device itself. The processor of the wearable electronic device may receive and analyze sensor inputs using a knowledge base and an inference engine that may be trained to recognize certain finger and/or hand movements as command gestures.

In a system that recognizes and models human gestures, the inventors have appreciated that it is desirable for the system to rapidly learn gestures from few training samples. It may also be desirable for the system to capture and interpret meaningful features from the gestures in an unsupervised way, for instance, using unlabeled training data. Such meaningful features may include features indicative of a force or amount of force applied during performance of a gesture, which can convey different meaning. For example, different amounts of force applied to a same gesture may allow the system to generate different command signals for controlling objects in virtual or augmented reality environments, controlling devices in a user's environment, or other suitable systems and/or devices.

According to the present invention there is provided an apparatus in accordance with claim 1.

Optionally the instructions, when executed by the processor, cause the processor to: train a classification model based on the first plurality of neuromuscular signals and the second plurality of neuromuscular signals. Optionally the training comprises deriving, based on a clustering technique, a first set of values indicative of distinctive features of a first gesture including at least one feature that linearly varies with a force applied during performance of the first gesture and a second set of values indicative of distinctive features of a second gesture including at least one feature that linearly varies with a force applied during performance of the second gesture; and generate a categorical representation of the first gesture and a categorical representation of the second gesture in the classification model. Optionally the instructions, when executed by the processor, cause the processor to determine, based at least in part on a third plurality of neuromuscular signals and the classification model, whether a user performed a subsequent act of the first gesture or the second gesture.

According to the present invention there is further provided a method in accordance with claim 9.

Yet other embodiments are directed to a computerized system for training a classification model based on a single act of a first gesture. The system comprises a plurality of neuromuscular sensors configured to record a plurality of neuromuscular signals from a user as the user performs the single act of the first gesture; and at least one computer processor programmed to: train, using an unsupervised machine learning technique, the classification model to create a unique representation of the gesture in the classification model based on at least some of the plurality of neuromuscular signals.

In one aspect, the at least one computer processor is further programmed to identify at least one activity period within the recorded plurality of neuromuscular signals, wherein the at least some of the plurality of neuromuscular signals used for training the classification model are neuromuscular signals recorded during the at least one activity period.

In another aspect, the at least some of the plurality of neuromuscular signals used for training the classification model do not include neuromuscular signals indicative of rest or neutral positions.

In another aspect, identifying at least one activity period comprises identifying an activity period as a time period during which a power value associated with each of the plurality of neuromuscular signals is above a threshold value.

In another aspect, creating a unique representation of the first gesture in the classification model comprises processing the at least some of the plurality of neuromuscular signals to generate a plurality of points in a component feature space; and clustering at least some of the generated points to create the unique representation of the first gesture.

In another aspect, processing the at least some of the plurality of neuromuscular signals to generate the plurality of points in a component feature space comprises performing a principal component analysis on the at least some of the plurality of neuromuscular signals.

In another aspect, clustering at least some of the generated points comprises applying a K-means clustering analysis to generate one or more clusters of points in the component feature space; and including the one or more clusters of points in the unique representation of the first gesture based on a similarity metric.

In another aspect, the similarity metric comprises a cosine distance.

In another aspect, creating the unique representation of the first gesture comprises generating a vector in the component feature space based on the generated points.

In another aspect, points along the vector represent performance of the first gesture using different amounts of force.

In another aspect, the at least one computer processor is further programmed to associate a first control signal with the unique representation of the first gesture.

In another aspect, the at least one computer processor is further programmed to associate the first control signal and a second control signal with the unique representation of the first gesture, wherein the system is configured to generate the first control signal when the first gesture is performed while applying a force that is below a threshold value and to generate the second control signal when the first gesture is performed while applying a force that is equal to or above the threshold value.

In another aspect, the plurality of neuromuscular sensors are further configured to record a second plurality of neuromuscular signals as the user performs a single act of a second gesture; and the at least one computer processor programmed to: train, using an unsupervised machine learning technique, the classification model to create a unique representation of the second gesture in the classification model based on at least some of the second plurality of neuromuscular signals.

In another aspect, creating a unique representation of the second gesture in the classification model comprises: processing the at least some of the second plurality of neuromuscular signals to generate a plurality of second points in the component feature space; and clustering at least some of the plurality of second points to create the unique representation of the second gesture.

In another aspect, creating a unique representation of the first gesture in the classification model comprises: processing the at least some of the plurality of neuromuscular signals to generate a first plurality of points in a component feature space; and generating a first vector in the component feature space based on the generated first plurality of points, wherein creating the unique representation of the second gesture comprises generating a second vector in the component feature space based on the second plurality of points, and wherein the second vector associated with the second gesture is different than a first vector associated with the first gesture.

In another aspect, the plurality of neuromuscular sensors are arranged on one or more wearable devices.

Other embodiments are directed to a computerized system for classifying a gesture performed by a user. The system comprises a plurality of neuromuscular sensors configured to record a plurality of neuromuscular signals from the user as the user performs a first gesture; and at least one computer processor. The at least one computer processor is programmed to: create a representation of the first gesture in a component feature space of a classification model, wherein the classification model is trained to include a unique representation of each of a plurality of gestures in the component features space; determine whether the representation of the first gesture corresponds to any of the unique representations of the plurality of gestures included in the classification model; and generate, when it is determined that the representation of the first gesture corresponds to one of the unique representations, a control signal associated with the unique representation.

In one aspect, creating a representation of the first gesture comprises processing the at least some of the plurality of neuromuscular signals to generate a plurality of points in the component feature space; and clustering at least some of the plurality points to create the representation of the first gesture.

In another aspect, processing the at least some of the plurality of neuromuscular signals to generate a plurality of points in the component feature space comprises performing a principal component analysis on the at least some of the plurality of neuromuscular signals.

In another aspect, clustering at least some of the plurality of points comprises: applying a k-means clustering analysis to generate one or more clusters of points in the component feature space; and including the one or more clusters of points in the representation of the first gesture based on a similarity metric.

In another aspect, the similarity metric comprises a cosine distance.

In another aspect, creating the representation of the first gesture comprises generating a first vector in the component feature space based on the plurality of points.

In another aspect, determining whether the representation of the first gesture corresponds to one of the unique representations comprises determining, based on a similarity metric, whether the first vector associated with the first gesture corresponds to one of a plurality of vectors associated with the plurality of gestures.

In another aspect, the similarity metric is a cosine distance between the first vector and each of the plurality of vectors in the component feature space.

In another aspect, the plurality of neuromuscular sensors are arranged on one or more wearable devices.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

## BRIEF DESCRIPTION OF DRAWINGS

Various non-limiting embodiments of the technology will be described with reference to the following figures. It should be appreciated that the figures are not necessarily drawn to scale.

FIG. 1 is a schematic diagram of a computer-based system for processing neuromuscular sensor data in accordance with some embodiments of the technology described herein;

FIG. 2A illustrates a wearable system with sixteen EMG sensors arranged circumferentially around an elastic band configured to be worn around a user's lower arm or wrist, in accordance with some embodiments of the technology described herein;

FIG. 2B is a cross-sectional view through one of the sixteen EMG sensors illustrated in FIG. 2A;

FIGS. 3A and 3B schematically illustrate components of a computer-based system on which some embodiments are implemented. FIG. 3A illustrates a wearable portion of the computer-based system and FIG. 3B illustrates a dongle portion connected to a computer, wherein the dongle portion is configured to communicate with the wearable portion;

FIG. 4 is a flowchart of a process for generating a classification model based on neuromuscular signals recorded from sensors, in accordance with some embodiments of the technology described herein;

FIG. 5 illustrates examples of user-defined gestures, in accordance with some embodiments of the technology described herein;

FIG. 6A illustrates a first set of gestures associated with a first user, in accordance with some embodiments of the technology described herein;

FIG. 6B illustrates a second set of gestures associated with a second user, in accordance with some embodiments of the technology described herein;

FIG. 7 is a flowchart of a process for identifying gestures based on a trained classification model in accordance with some embodiments of the technology described herein;

FIG. 8 illustrates signals representing three different gestures captured via sixteen sensors arranged on the wearable system of FIG. 2A, in accordance with some embodiments of the technology described herein;

FIG. 9 illustrates examples of covariance matrices computed from neuromuscular signals associated with different gestures, in accordance with some embodiments of the technology described herein;

FIG. 10 illustrates a graph showing power values associated with data points corresponding to rest and activity positions, in accordance with some embodiments of the technology described herein;

FIG. 11 illustrates a tangent space and a principal component analysis (PCA) space computed from a training data set, in accordance with some embodiments of the technology described herein;

FIG. 12 illustrates examples of learned gesture vectors, in accordance with some embodiments of the technology described herein;

FIG. 13 illustrates a graph showing forces computed as a function of maximum voluntary contraction for each gesture performed during a training phase, in accordance with some embodiments of the technology described herein;

FIG. 14 illustrates identification of three different gestures based on their computed cosine distances, in accordance with some embodiments of the technology described herein;

FIG. 15 illustrates forces inferred for each of the gestures identified during a classification phase, in accordance with some embodiments of the technology described herein;

FIG. 16 illustrates three unseen vectors mapped to a Principal Components Analysis (PCA) space, in accordance with some embodiments of the technology described herein.

DETAILED DESCRIPTION

Some existing techniques for recognizing and modeling human gestures use labeled training data that is prone to human errors. Errors in labeling of training data results in inaccurate training of supervised learning models, which in turn, leads to errors in gesture recognition. In addition, such techniques typically require large amounts of labeled training data, which is difficult and time consuming to acquire and produce. Furthermore, processing such large amounts of labeled data consumes significant computing and memory resources.
Some existing techniques for recognizing and modeling human gestures also fail to capture meaningful features associated with the human gestures, such as, a force or amount of force applied during performance of a gesture. For example, in an image recognition context, a supervised learning model may be trained to recognize gestures based on labeled image data. These labeled images reflect a positioning of a person's hand during performance of the gesture, but the labeled images do not reflect information associated with the force that the user applied when performing the gesture.

The inventors have recognized that existing techniques used for recognizing and modeling human gestures may be improved by utilizing an unsupervised machine learning or training approach to train a classification model to recognize and model one or more user-defined gestures and forces applied by users at the time of performing such gestures. The classification model may be trained with unlabeled data obtained from neuromuscular sensors arranged on a wearable device. The unlabeled data may include neuromuscular signals recorded from the neuromuscular sensors.

The inventors have recognized that by utilizing an unsupervised training approach, an example of which, is described in detail below, a classification model can be trained based on neuromuscular signals that are recorded as the user performs a single act of a gesture (also referred to as "oneshot" training or learning). The classification model is trained to recognize the gesture by generating a categorical representation of the gesture in the model. The categorical representation of the gesture may be generated based on one or more features derived from the recorded neuromuscular signals and/or one or more force values associated with a force applied during performance of the gesture. The categorical representation may include a representation via which a type of gesture performed by the user and the amount of force applied by the user during performance of the gesture can be inferred. Using the trained classification model, subsequent performance of the same gesture by the user can be identified based on its categorical representation in the classification model.

According to some embodiments, the classification model can be trained to recognize multiple gestures performed by a user or multiple users. For example, the classification model can be trained based on neuromuscular signals that are recorded as the user performs a single act of each of the gestures. A clustering technique may be utilized to partition the recorded sensor data into a number of clusters, each cluster associated with a particular gesture. A categorical representation of each gesture may be determined based on the associated cluster. For example, the categorical representation may include information identifying the type of gesture, a direction, and a force scale (e.g., a range of force values/amounts) associated with the gesture. After the classification model is trained, the system may determine whether a gesture performed by the user maps to any of the categorical representations associated with the different gestures represented in the classification model.

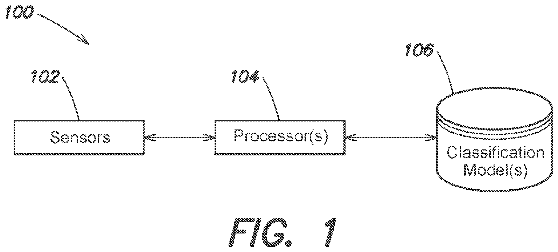

FIG. 1 illustrates a system 100 in accordance with some embodiments. The system includes a plurality of sensors 102 configured to record signals arising from neuromuscular activity in skeletal muscle of a human body. The term "neuromuscular activity" as used herein refers to neural activation of spinal motor neurons that innervate a muscle, muscle activation, muscle contraction, or any combination of the neural activation, muscle activation, and muscle contraction. Neuromuscular sensors may include one or more electromyography (EMG) sensors, one or more mechanomyography (MMG) sensors, one or more sonomyography (SMG) sensors, a combination of two or more types of EMG sensors, MMG sensors, and SMG sensors, and/or one or more sensors of any suitable type that are configured to detect neuromuscular signals. In some embodiments, the plurality of neuromuscular sensors may be used to sense muscular activity related to a movement of the part of the body controlled by muscles from which the neuromuscular sensors are arranged to sense the muscle activity. Spatial information (e.g., position and/or orientation information) and force information describing the movement may be predicted based on the sensed neuromuscular signals as the user moves over time or performs one or more gestures.

Sensors 102 may include one or more Inertial Measurement Units (IMUs), which measure a combination of physical aspects of motion, using, for example, an accelerometer, a gyroscope, a magnetometer, or any combination of one or more accelerometers, gyroscopes and magnetometers. In some embodiments, IMUs may be used to sense information about the movement of the part of the body on which the IMU is attached and information derived from the sensed data (e.g., position and/or orientation information) may be tracked as the user moves over time. For example, one or more IMUs may be used to track movements of portions of a user's body proximal to the user's torso relative to the sensor (e.g., arms, legs) as the user moves over time or performs one or more gestures.

In embodiments that include at least one IMU and a plurality of neuromuscular sensors, the IMU(s) and neuromuscular sensors may be arranged to detect movement of different parts of the human body. For example, the IMU(s) may be arranged to detect movements of one or more body segments proximal to the torso (e.g., an upper arm), whereas the neuromuscular sensors may be arranged to detect movements of one or more body segments distal to the torso (e.g., a forearm or wrist). It should be appreciated, however, that autonomous sensors may be arranged in any suitable way, and embodiments of the technology described herein are not limited based on the particular sensor arrangement. For example, in some embodiments, at least one IMU and a plurality of neuromuscular sensors may be co-located on a body segment to track movements of body segment using different types of measurements. In one implementation described in more detail below, an IMU sensor and a plurality of EMG sensors are arranged on a wearable device configured to be worn around the lower arm or wrist of a user. In such an arrangement, the IMU sensor may be configured to track movement information (e.g., positioning and/or orientation over time) associated with one or more arm segments, to determine, for example whether the user has raised or lowered their arm, whereas the EMG sensors may be configured to determine movement information associated with wrist or hand segments to determine, for example, whether the user has an open or closed hand configuration.

Each of the sensors 102 includes one or more sensing components configured to sense information about a user. In the case of IMUs, the sensing components may include one or more accelerometers, gyroscopes, magnetometers, or any combination thereof to measure characteristics of body motion, examples of which include, but are not limited to, acceleration, angular velocity, and sensed magnetic field around the body. In the case of neuromuscular sensors, the sensing components may include, but are not limited to, electrodes configured to detect electric potentials on the surface of the body (e.g., for EMG sensors) vibration sensors configured to measure skin surface vibrations (e.g., for MMG sensors), and acoustic sensing components configured to measure ultrasound signals (e.g., for SMG sensors) arising from muscle activity.

In some embodiments, at least some of the plurality of sensors 102 are arranged as a portion of a wearable device configured to be worn on or around part of a user's body. For example, in one non-limiting example, an IMU sensor and a plurality of neuromuscular sensors are arranged circumferentially around an adjustable and/or elastic band such as a wristband or armband configured to be worn around a user's wrist or arm. Alternatively, at least some of the autonomous sensors may be arranged on a wearable patch configured to be affixed to a portion of the user's body. In some embodiments, multiple wearable devices, each having one or more IMUs and/or neuromuscular sensors included thereon may be used to predict musculoskeletal position information for movements that involve multiple parts of the body.

In some embodiments, sensors 102 only include a plurality of neuromuscular sensors (e.g., EMG sensors). In other embodiments, sensors 102 include a plurality of neuromuscular sensors and at least one "auxiliary" sensor configured to continuously record a plurality of auxiliary signals. Examples of auxiliary sensors include, but are not limited to, other autonomous sensors such as IMU sensors, and non-autonomous sensors such as an imaging device (e.g., a camera), a radiation-based sensor for use with a radiation-generation device (e.g., a laser-scanning device), or other types of sensors such as a heart-rate monitor.

In some embodiments, the output of one or more of the sensing components may be processed using hardware signal processing circuitry (e.g., to perform amplification, filtering, and/or rectification). In other embodiments, at least some signal processing of the output of the sensing components may be performed in software. Thus, signal processing of signals recorded by the sensors may be performed in hardware, software, or by any suitable combination of hardware and software, as aspects of the technology described herein are not limited in this respect.

In some embodiments, the recorded sensor data may be processed to compute additional derived measurements or features that are then provided as input to a classification model, as described in more detail below. For example, recorded signals from an IMU sensor may be processed to derive an orientation signal that specifies the orientation of a rigid body segment over time. Sensors 102 may implement signal processing using components integrated with the sensing components, or at least a portion of the signal processing may be performed by one or more components in communication with, but not directly integrated with the sensing components of the sensors.

System 100 also includes one or more computer processors 104 programmed to communicate with sensors 102. For example, signals recorded by one or more of the sensors may be provided to the processor(s), which may be programmed to process signals output by the sensors 102 to train one or more classification models 106, and the trained (or retrained) classification model(s) 106 may be stored for later use in identifying/classifying gestures and generating control/command signals, as described in more detail below. In some embodiments, the processors 104 may be programmed to derive one or more features associated with one or more gestures performed by a user and the derived feature(s) may be used to train the one or more classification models 106. The processors 104 may be programmed to identify a subsequently performed gesture based on the trained one or more classification models 106. In some implementations, the processors 104 may be programmed to utilize the classification model, at least in part, to map an identified gesture to one or more control/command signals.

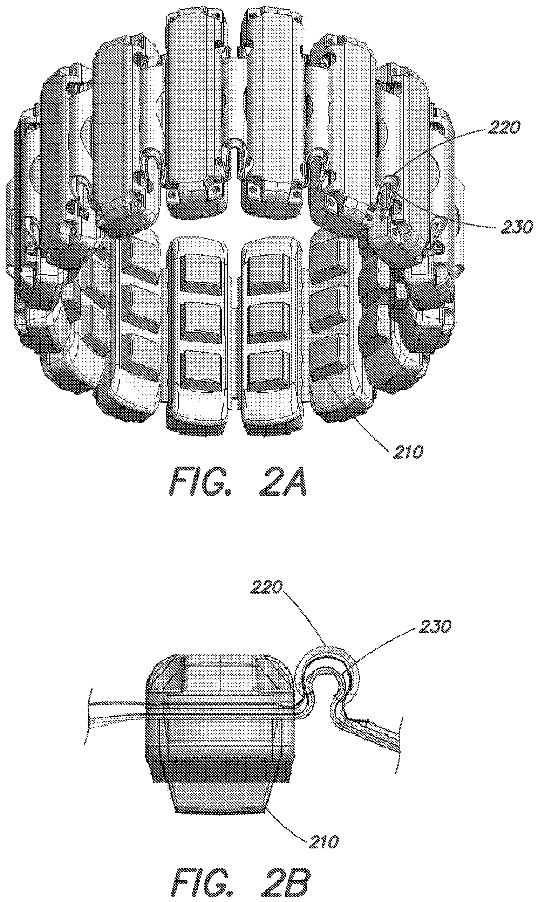

FIG. 2A illustrates a wearable system with sixteen neuromuscular sensors 210 (e.g., EMG sensors) arranged circumferentially around an elastic band 220 configured to be worn around a user's lower arm or wrist. As shown, EMG sensors 210 are arranged circumferentially around elastic band 220. It should be appreciated that any suitable number of neuromuscular sensors may be used. The number and arrangement of neuromuscular sensors may depend on the particular application for which the wearable device is used. For example, a wearable armband or wristband can be used to generate control information for controlling an augmented reality system, a virtual reality system, a robot, controlling a vehicle, scrolling through text, controlling a virtual avatar, or any other suitable control task. As shown the sensors 210 may be coupled together using flexible electronics 230 incorporated into the wearable device. FIG. 2B illustrates a cross-sectional view through one of the sensors 210 of the wearable device shown in FIG. 2A.

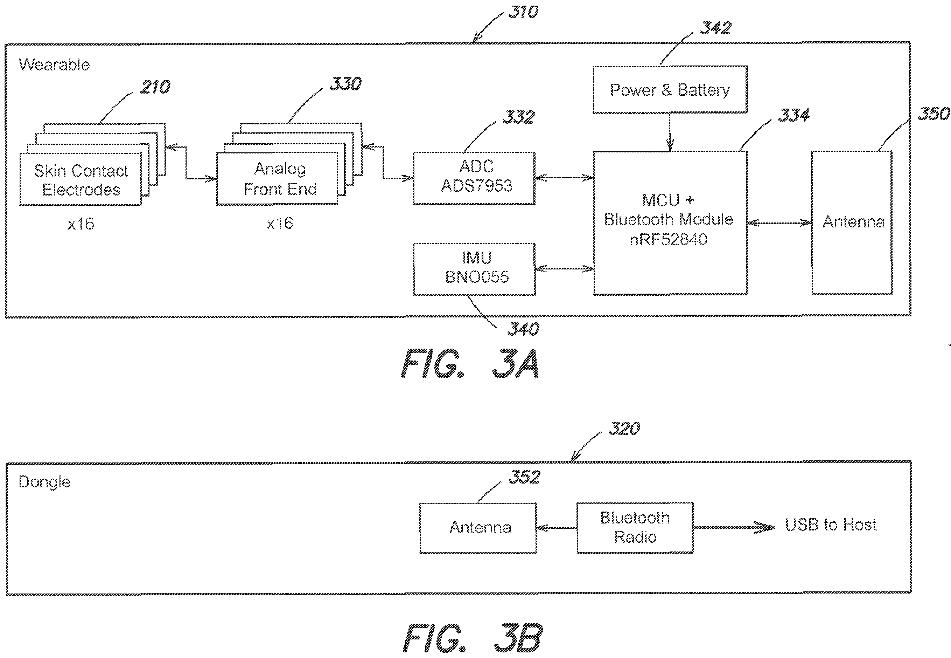

In some embodiments, the output of one or more of the sensors can be optionally processed using hardware signal processing circuitry (e.g., to perform amplification, filtering, and/or rectification). In other embodiments, at least some signal processing of the output of the sensors can be performed in software. Thus, processing of signals sampled by the sensors can be performed in hardware, software, or by any suitable combination of hardware and software, as aspects of the technology described herein are not limited in this respect. A non-limiting example of a signal processing chain used to process recorded data from sensors 210 is discussed in more detail below in connection with FIGS. 3A and 3B.

FIGS. 3A and 3B illustrate a schematic diagram showing some internal components of a wearable system with sixteen EMG sensors, in accordance with some embodiments of the technology described herein. As shown, the wearable system includes a wearable portion 310 (FIG. 3A) and a dongle portion 320 (FIG. 3B) in communication with the wearable portion 310 (e.g., via Bluetooth or another suitable short range wireless communication technology). As shown in FIG. 3A, the wearable portion 310 includes the sensors 210, examples of which are described in connection with FIGS. 2A and 2B. The output of the sensors 210 is provided to analog front end 330 configured to perform analog processing (e.g., noise reduction, filtering, etc.) on the recorded signals. The processed analog signals are then provided to analog-to-digital converter 332, which converts the analog signals to digital signals that can be processed by one or more computer processors (e.g., processor 104). An example of a computer processor that may be used in accordance with some embodiments is microcontroller (MCU) 334 illustrated in FIG. 3A. As shown, MCU 334 may also include inputs from other sensors (e.g., IMU sensor 340), and power and battery module 342. The output of the processing performed by MCU may be provided to antenna 350 for transmission to dongle portion 320 shown in FIG. 3B.

Dongle portion 320 includes antenna 352 configured to communicate with antenna 350 included as part of wearable portion 310. Communication between antenna 350 and 352 may occur using any suitable wireless technology and protocol, non-limiting examples of which include radiofrequency signaling and Bluetooth. As shown, the signals received by antenna 352 of dongle portion 320 may be provided to a host computer for further processing, display, and/or for effecting control of a particular physical or virtual object or objects.

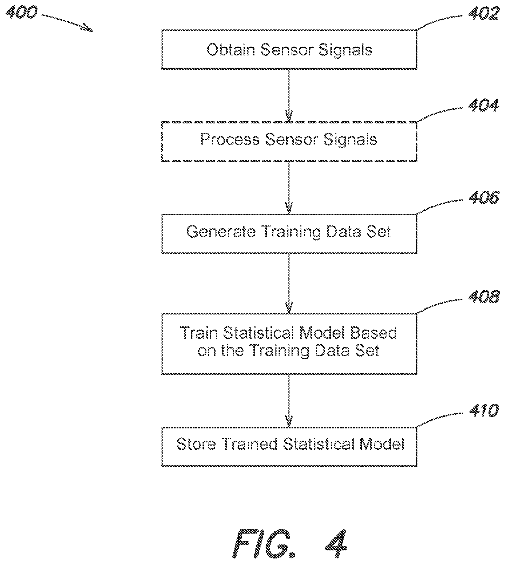

FIG. 4 describes a process 400 for generating (also referred to herein as "training") a classification model 106 using signals recorded from sensors 102 including, for example, sensors 210. FIG. 4 represents a "training phase" for training the classification model. Process 400 may be executed by any suitable computing device(s), as aspects of the technology described herein are not limited in this respect. For example, process 400 may be executed by one or more computer processors described with reference to FIGS. 1, 3A and 3B. As another example, one or more acts of process 400 may be executed using one or more servers (e.g., servers included as a part of a cloud computing environment). For example, at least a portion of act 408 relating to training of a classification model may be performed using a cloud computing environment. In some implementations, the classification model may trained in near real-time. As used herein the term "near real-time" refers to instantaneous perception by the user, e.g., on the order of milliseconds.

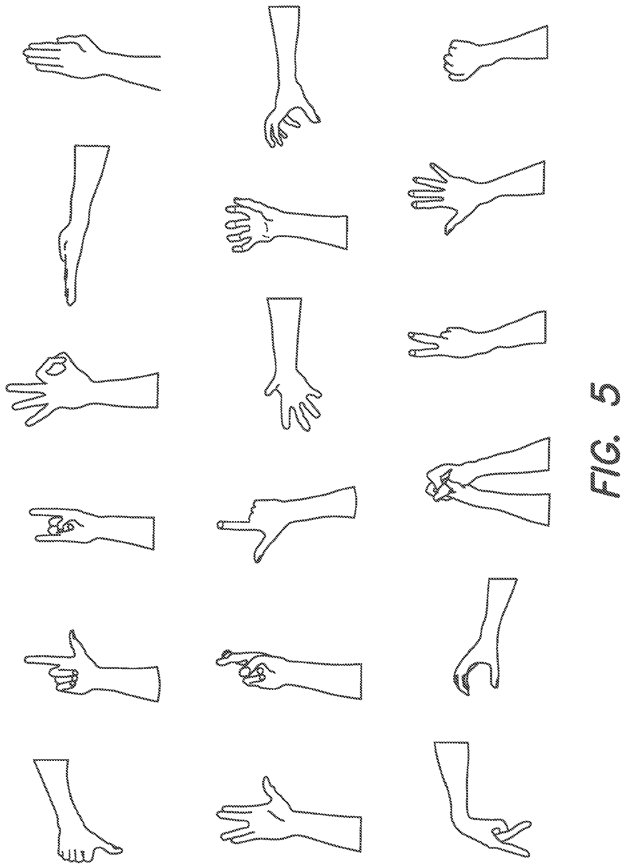

Process 400 begins at act 402, where a plurality of sensor signals is obtained for one or multiple users performing one or more gestures, such as gestures depicted in FIG. 5. In some embodiments, the plurality of sensor signals may be recorded as part of process 200. In other embodiments, the plurality of sensor signals may have been recorded prior to the performance of process 400 and are accessed (rather than recorded) at act 402.

As used herein, the term "gestures" refers to a static or dynamic configuration of one or more body parts including the position of the one or more body parts and forces associated with the configuration. For example, gestures include discrete gestures, such as pressing the palm of a hand down on a solid surface or grasping a ball, continuous gestures, such as a waving a finger back and forth or throwing a ball, or a combination of discrete and continuous gestures such as grasping and throwing a ball. Gestures may be arbitrarily defined by a user. In some cases, hand and arm gestures may be symbolic and used to communicate according to cultural standards.

In some embodiments, the gestures may include non-restrictive or customized gestures (also referred to herein as "user-defined" gestures) defined by a user that may represent the user's own and unique collection of gestures. These gestures may not be predefined or pre-modeled in the system and the classification model may be trained to identify any type of gesture while applying any amount of force. It will be appreciated that the disclosure is not limited to utilizing or recognizing the gestures depicted in FIG. 5, and any type of user-defined gesture may be utilized.

In some embodiments, the plurality of sensor signals may include sensor signals recorded for a single user performing a single gesture or multiple gestures and the classification model may be trained to recognize the gesture(s) performed by the user. Sensor signals may be recorded as the user performs the gesture(s). The sensor signals may be recorded by any suitable number of sensors located in any suitable location(s) to detect the user's movements indicative of the gesture(s). For example, when the user uses the fingers of his/her right hand to perform a gesture, the sensor signals may be recorded by multiple neuromuscular sensors circumferentially (or otherwise) arranged around the user's lower right arm to detect muscle activity in the lower right arm that give rise to the movements of the user's right hand. One or more IMU sensors may be arranged to predict the joint angle of the user's arm relative to the user's torso. As another example, when the user uses his legs to perform a gesture, sensor signals may be recorded by multiple neuromuscular sensors circumferentially (or otherwise) arranged around the user's leg to detect muscle activity in the leg that give rise to the movements of the foot and one or more IMU sensors may be arranged to predict the joint angle of the user's leg relative to the user's torso.

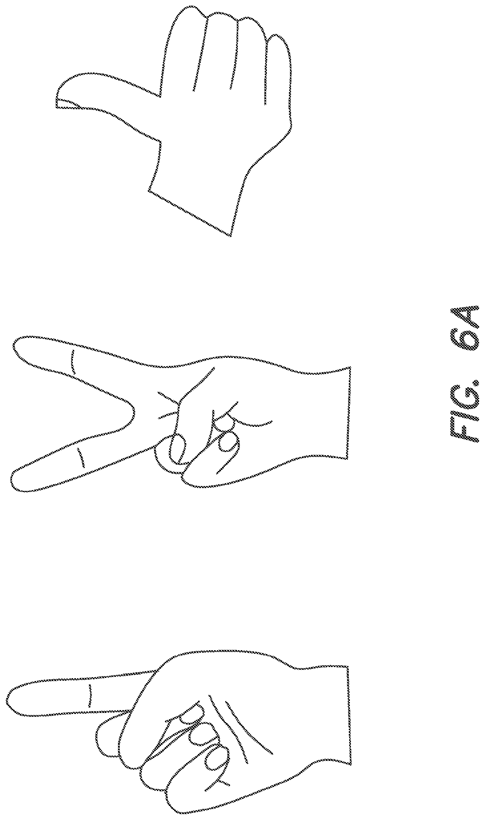

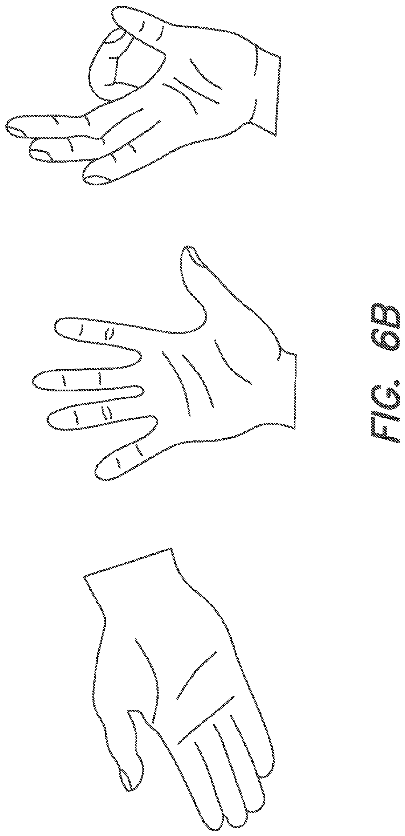

In some embodiments, the plurality of sensor signals may include sensor signals recorded for multiple users performing various gesture(s) and the classification model may be trained to recognize gesture(s) performed by the multiple users. For example, the classification model may be trained to recognize a first set of gestures (shown in FIG. 6A) associated with a first user of the system and a second set of gestures (shown in FIG. 6B) associated with a second user of the system. In some instances, the first set of gestures may be different than the second set of gestures. In some other instances, the first and second set of gestures may be the same. In yet other instances, some gestures in the first set and the second set can overlap (e.g., the sets can have one or more gestures in common).

In some embodiments, the sensor signals obtained in act 402 correspond to signals from one type of sensor (e.g., one or more IMU sensors or one or more neuromuscular sensors) and a classification model may be trained based on the sensor signals recorded using the particular type of sensor, resulting in a sensor-type specific trained classification model. For example, the obtained sensor signals may comprise a plurality of EMG sensor signals arranged around the lower arm or wrist of a user and the classification model may be trained to recognize hand gestures performed by the user(s).

In embodiments that recognize gestures based on multiple types of sensors (e.g., IMU sensors, EMG sensors, MMG sensors, SMG sensors), a separate classification model may be trained for each of the types of sensors and the outputs of the sensor-type specific models may be combined to recognize gesture(s) performed by the user(s). In other embodiments, the sensor signals obtained in act 402 from two or more different types of sensors may be provided to a single classification model that is trained based on the signals recorded from the different types of sensors. In one illustrative implementation, an IMU sensor and a plurality of EMG sensors are arranged on a wearable device configured to be worn around the forearm of a user, and signals recorded by the IMU and EMG sensors are collectively provided as inputs to a classification model, as discussed in more detail below.

In some embodiments, the sensor signals obtained in act 402 are recorded at multiple time points as a user performs one or multiple gestures. As a result, the recorded signal for each sensor may include data obtained at each of multiple time points. Assuming that $n$ sensors are arranged to simultaneously measure the user's movement information during performance of a gesture, the recorded sensor signals for the user may comprise a time series of K $n$-dimensional vectors $\{x_k \mid 1 \leq k \leq K\}$ at time points $t_1, t_2, ..., t_k$ during performance of the movements.

Next, process 400 proceeds to act 404, where the sensor signals obtained in act 202 are optionally processed. For example, the sensor signals may be processed using amplification, filtering, rectification, or other types of signal processing. In some embodiments, the sensor signals obtained in act 402 may be filtered using a bandpass or high pass filter.

Next, process 400 proceeds to act 406, where a training data set is generated for purposes of training a classification model. The training data set may be generated based on the sensor signals obtained in act 402 or processed sensor signals from act 404. In some embodiments, generating the training data set may include removing certain samples corresponding to rest or neutral positions from the training data set, as described in more detail below.

Next, process 400 proceeds to act 408, where the classification model is trained based on the training data set. In some embodiments, training the classification model may include determining one or more distinctive features associated with the gesture(s) based on values sampled or otherwise derived from the sensor signals (e.g., data obtained at multiple time points) in the training data set. The one or more distinctive features may include a feature that linearly varies with a force applied by the user during performance of the gesture(s) or other properties associated with the gesture (e.g., gesture type, direction, force scale, etc.). According to some aspects, training the classification model may include generating a categorical representation of each of the gestures performed by the user in the classification model. The categorical representation may be generated based on the values derived from the sensor signals that are indicative of the one or more distinctive features.

In some implementations, training the classification model may proceed by providing as input to the model a sequence of data sets each of the data sets in the sequence comprising an n-dimensional vector of sensor data. The classification model may provide as output a likelihood that a particular gesture that the classification model recognized based on the input signals corresponds to the gesture the user performed. For example, the classification model may take as input a sequence of vectors $\{x_k \mid 1 \leq k \leq K\}$ generated using measurements obtained at time points $t_1, t_2, ..., t_K$, where the $i$th component of vector $\mathbf{x_j}$ is a value measured by the $i$th sensor at time $t_j$ and/or derived from the value measured by the $i$th sensor at time $t_j$. In another non-limiting example, a derived value provided as input to the classification model may comprise or otherwise be indicative of features extracted from the data from all or a subset of the sensors at and/or prior to time $t_j$ (e.g., a covariance matrix, a cospectral matrix, a power spectrum, a combination thereof, or any other suitable derived representation). Based on such input, the classification model may be trained to recognize gesture(s) performed by a user or multiple users.

In embodiments comprising sensors of different types (e.g., IMU sensors and neuromuscular sensors) configured to simultaneously record different types of movement information during performance of a task, the sensor data for the different types of sensors may be recorded using the same or different sampling rates. When the sensor data is recorded at different sampling rates, at least some of the sensor data may be resampled (e.g., up-sampled or down-sampled) such that all sensor data provided as input to the classification model corresponds to time series data at the same time resolution. Resampling at least some of the sensor data may be performed in any suitable way including, but not limited to using interpolation for upsampling and using decimation for downsampling.

In addition to or as an alternative to resampling at least some of the sensor data when recorded at different sampling rates, some embodiments employ a classification model configured to accept multiple inputs asynchronously. For example, the classification model may be configured to model the distribution of the "missing" values in the input data having a lower sampling rate. Alternatively, the timing of training of the classification model occur asynchronously as input from multiple sensor data measurements becomes available as training data.

Next, process 400 proceeds to act 410, where the trained classification model is stored (e.g., in a datastore - not shown). The trained statistical model may be stored using any suitable format, as aspects of the technology described herein are not limited in this respect. Thus, the classification model generated during execution of process 400 may be used at a later time, for example, to recognize gestures performed by a user or multiple users based on a given set of input sensor data, as described below.

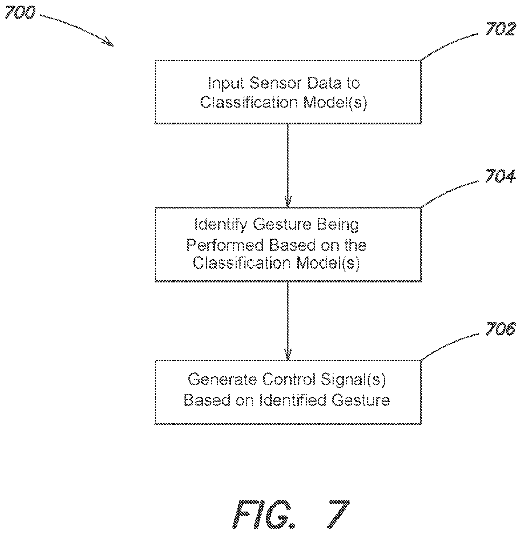

FIG. 7 illustrates a process 700 for recognizing user-defined gestures based on recorded sensor data in accordance with some embodiments. FIG. 7 represents a "gesture recognition phase" where the trained classification model is used to recognize gestures being performed by users and generate corresponding command/control signals. In act 702, sensor data recorded by one or more sensors is provided as input to one or more trained classification models that include one or more categorical representations for each of the gestures previously performed by a user or multiple users, as described briefly above.

Process 700 then proceeds to act 704, where the gesture being performed by the user is recognized or identified based on the trained classification model(s). In some embodiments, a determination may be made regarding whether the gesture performed by the user maps to a previously learned gesture in the trained classification model(s). In some embodiments, the neuromuscular signals are recorded continuously during user movements including during performance of the gesture and are provided continuously as input to the trained classification model, resulting in near real-time prediction/ recognition of the gesture being performed by the user based on the trained classification model(s).

Process 700 then proceeds to act 706, where one or more command/control signals may be generated based on the identified gesture. The one or more control signals may include signal(s) that activate/deactivate compute devices, control objects in virtual environments, control objects in augmented reality environments, control IoT (Internet of Things) devices, and/or other suitable systems and/or devices. In some embodiments, a single gesture may be configured to generate different signals based on a force a user applies during performance of the gesture. In some embodiments, a level or amount of force applied by the user during performance of the gesture may be determined, for example, in act 704. The measured force may be computed as a continuous variable, ordinal variable, interval variable, descriptive statistic metric or other suitable form.

### Example technique for training classification model(s) Training Phase

In some implementations, a user wearing the wearable system (depicted in FIGs. 2A, 3A, for example) may consecutively perform a set of gestures (e.g., G1, G2, and G3) or any other number of gestures including just one gesture. The user may perform each of the gestures only once (i.e., perform a single act of each gesture). The system may record and store neuromuscular signals (e.g., EMG signals) as the user performs the gestures. The gestures in the set of gestures can include, for example, G1=fist gesture, G2= open hand gesture, and G3= index pinch gesture. As discussed above, other types of gestures different from G1, G2, and G3 can alternatively be performed by a user. In other words, the user is not constrained to performing a pre-defined set of gestures. Rather, an unsupervised machine learning technique used in accordance with some embodiments may be configured to identify any type of gesture (e.g., arm or hand gestures) irrespective of their form.

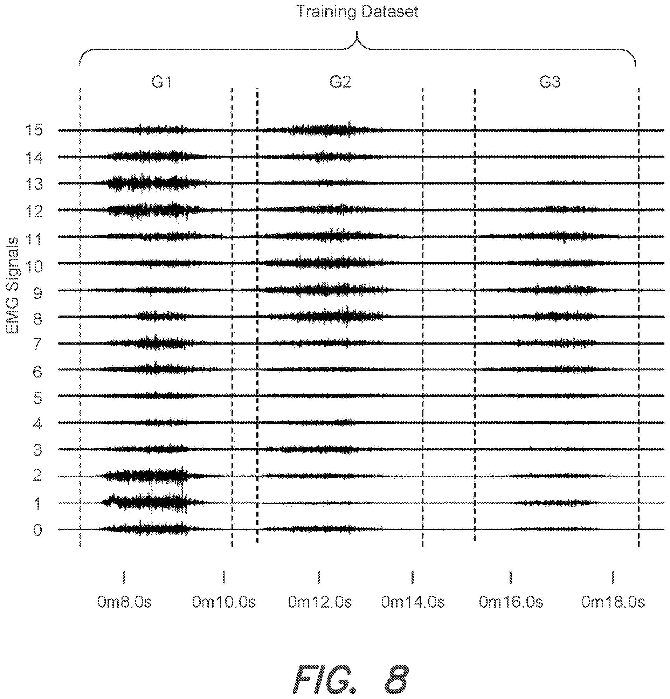

The system may capture and record a set of neuromuscular signals sampled from the user as the user performs gestures G1, G2, and G3 as shown in FIG. 8. The set of neuromuscular signals may be used as the training data set for the classification model(s). In some embodiments, the set of neuromuscular signals may include signals recorded for each of the sixteen neuromuscular sensors of the wearable system. Each signal in the set may be filtered using, for example, a bandpass, or high pass, or other filtering technique.

In some embodiments, one or more values indicative of distinctive features of each of the gestures may be derived from the set of neuromuscular signals. The distinctive features may include at least one feature that linearly varies with a force applied by the user during performance of the gesture(s). Examples of distinctive features include, but are not limited to, a covariance matrix computed from values sampled from the neuromuscular signals, cospectral matrices computed from the values, a set of filter bank covariance matrices corresponding to different frequencies, and a power spectrum per sensor (e.g., log-PSD (Power Spectral Density) detected by the sensor).

In some implementations, covariances between the filtered signals from EMG sensors (corresponding to sixteen EMG channels) are computed, for example, on a 200ms window with a stride of 25ms. Given signal $x(t)$ for the $N$ channels at the time $t$, the matrix $X = [x(t), ..., x(t + T)]$ (e.g., a $N$_channels x T_time_sample matrix) may be defined. Given the centered signal $x(t)$ (e.g., with zero mean after applying a bandpass filter), the covariance matrix can be expressed as:

$$C = XX^T$$

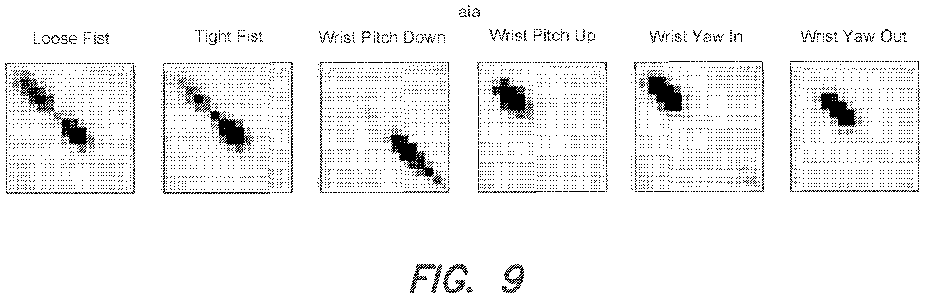

FIG. 9 illustrates examples of covariance matrices computed for different gestures. The covariance matrix corresponding to the same gesture such as a fist may also provide force features and thus the system may be able to differentiate between a loose fist gesture (e.g., a fist gesture performed with a small amount of force) and a tight fist gesture (e.g., a fist gesture performed with a large amount of force).

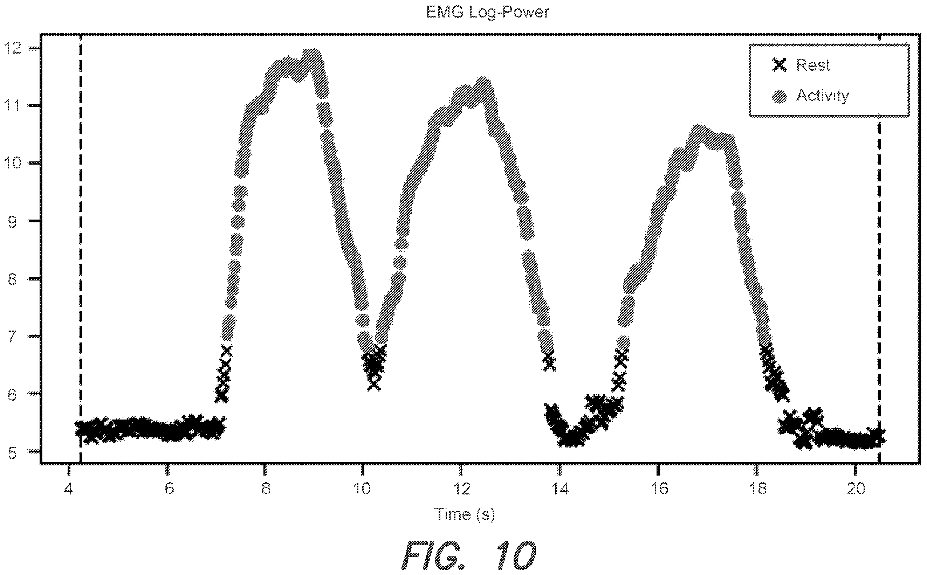

In some embodiments, samples indicating rest or neutral positions are removed from the training set because such signals are unlikely to include features that can serve to predict or identify a gesture. For example, EMG samples indicating rest or neutral positions can be identified by computing a threshold value (e.g., based on EMG Log-power) that differentiates rest or neutral positions from gesture positions (also referred to herein as activity positions). Accordingly, samples with an EMG Log-power below the computed threshold value may be excluded from the training set. Excluding samples from the training data set (e.g., based on their EMG Log-power) increases the system prediction accuracy and, in some instances, can prevent the system from producing false-positives. For example, in some instances, gestures performed with a negligible amount of force (e.g., below the computed threshold value) can be considered to be executed by the user unintentionally or by accident and as such should not be identified by the system as an intentional gesture. FIG. 10 shows a graph depicting EMG Log-power for data points corresponding to rest and activity positions.

In one embodiment, the threshold value can be computed, for example, by: (a) computing the 10th percentile of the data, and using the computed value as a threshold to capture the data containing activity positions (approximately 90th percentile) and containing rest positions (approximately 10th percentile), (b) rescaling the samples (e.g., EMG samples) to be between [0,1], then setting the threshold to be 0.1, or (c) determining the onset of the gesture (for example by looking at time differential of the power), then setting the threshold to be the value of previous point before the onset. Likewise, in some implementations the threshold value can be computed by a spectral clustering technique or other suitable clustering technique.

According to some aspects, the neuromuscular signals may be processed to generate a plurality of data points in a feature space. In some embodiments, vectorised covariances may be projected into or mapped to a tangent space of a manifold. For example, given a covariance matrix $C_i$ the vectorized covariances can be computed by:

$$S_i = \log\left(P^{-(1/2)} C_i P^{-(1/2)}\right)$$

where P is a reference point, and can correspond, for example, to the identity matrix or the average covariance matrix computed from samples taken during users' rest or neutral positions. The symmetric square matrix $S_i$ has the same size as the covariance matrix. The vectorized covariances may be computed based on the upper diagonal part of the symmetric matrix $S_i$, for example, by keeping the upper triangular part of the symmetric matrix $S_i$, and vectorizing it by computing unity weights of the diagonal elements and squared root weights for out-of-diagonal elements.

The inventors have recognized that covariances and tangent space mapping provide a richer and more sensitive feature set than, for example, other features such as Mean Absolute Value (MAV) of an $i$th EMG channel computed over a time window, because MAV does not account for correlation between different EMG channels.

In some embodiments, an average covariance of the rest or neutral position data in the training data set may be used as the reference point, e.g., the zero of the tangent space. In some instances, a dimensionality reduction technique (e.g., Principal Component Analysis (PCA)) may be performed on the neuromuscular signals to generate the plurality of data points in the feature space. The PCA technique may be performed to compress the training data set while preserving data properties useful to differentiate between two or more gestures, and to generate an effective set of gesture features.

In some embodiments, the number of principal components (e.g., linearly uncorrelated variables) used in the PCA analysis may be arbitrarily set to the number of gestures to be identified by the system. Such a dimensionality reduction for training data set S can be denoted as $S = (x_1,...,x_m)$, a feature mapping $\Phi : X \rightarrow \mathbb{R}^N$ and the data matrix $\mathbf{X} \in \mathbb{R}^{N \times m}$ defined as $(\Phi(x_1),...,\Phi(x_m))$, where the $i$th data point can be represented by $x_i = \Phi(x_1)$, or the ith column of $\mathbf{X}$, which is an N-dimensional vector. Dimensionality reduction techniques such as PCA may be performed, for example, to find for $k \ll N$ a $k$-dimensional representation of the data, $Y \in \mathbb{R}^{k \times m}$, that correlates with the original representation of **X**.

The PCA may be computed by fixing $k \in [1, N]$ and letting **X** be a mean-centered data matrix, that is, $\sum_{i=1}^{m} x_i = 0$ and defining $P_k$ as the set of $N$-dimensional rank-$k$ orthogonal projection matrices. Thereafter, an $N$-dimensional input data can be projected onto a $k$-dimensional linear subspace that minimizes reconstruction error, e.g., the sum of the squared $L_2$-distances between the original data and the projected data. Accordingly, the PCA can be defined as the orthogonal projection matrix solution **P\*** of the minimization of the error value computed as a function of the Frobenius norm F given by:

$$\min_{P \in P_k} \| \mathbf{PX} - \mathbf{X} \|_F^2$$

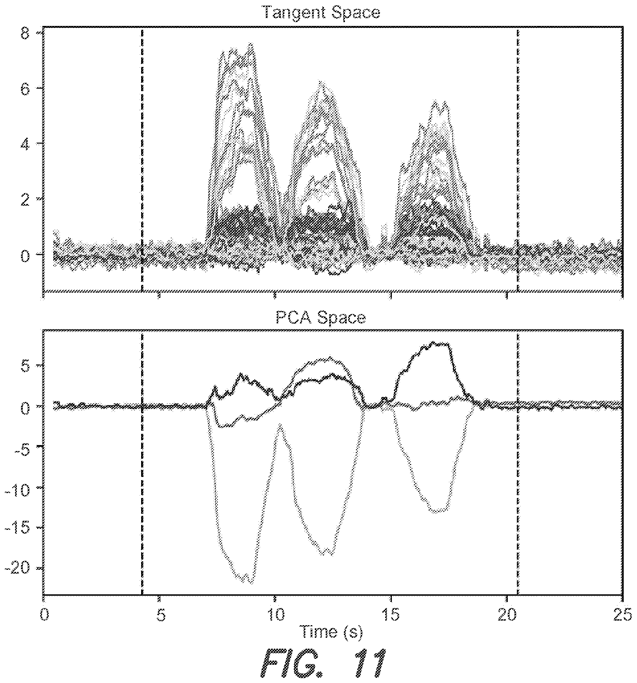

FIG. 11 illustrates a computed tangent space (at the top portion of the figure) and a computed PCA feature space (at the bottom portion of the figure) of a pre-processed training data set. In the tangent space, a positive value denotes an increase in signal energy with respect to the rest/neutral position and a negative value denotes a decrease in signal energy with respect to the rest/neutral position. The application of the PCA technique produces a lowdimensional representation of the data sets as shown in the bottom portion of the figure (the sign is arbitrary in the PCA space). The PCA space shows sequence(s) of linear combinations of the variables that have maximal variance and are mutually uncorrelated.

According to some aspects, the plurality of data points generated in the feature space (e.g., the PCA feature space) may be clustered via a clustering technique to create a categorical representation of each of the performed gestures G1, G2, and G3. In some implementations, a K-means clustering technique may be used to partition the data points into a K number of clusters based on a similarity metric. It will be appreciated that in embodiments where the classification model is trained to recognize a single gesture, clustering of the data points may not be performed as it may be assumed that all data points correspond to a single cluster associated with the single gesture.

In some embodiments, the similarity among data points may be computed by identifying interrelations between different data points are interrelated, how data points are similar or dissimilar with each other, and determining a measure to compare similarities or regularities among data points (also referred herein as similarity metric). K-means defines a prototype in terms of a centroid, which is the mean of a group of points in a continuous $n$-dimensional space. A pseudocode representation of the K-means clustering technique is provided below:

1. Select K points as initial centroids.

2. **repeat**

3. Form k clusters by assigning all points to the closest centroid.

4. Recompute the centroid of each cluster.

5. **until** the centroids do not change

The technique is initiated by selecting K initial centroids, where K is the number of desired clusters. Each data point is assigned to the nearest centroid, and each set of data points assigned to a centroid is considered a cluster. The centroid of a cluster may be updated several times based on the based on the data points assigned to the clusters. Step 3 (assignment) and step 4 (update) are repeated until no data point changes clusters, that is, until the centroids remain the same.

In some embodiments, a similarity metric used to partition EMG samples (data points) is based on the cosine distance between data points. The cosine distance is an example of suitable metric to distinguish between EMG samples that belong to the same gesture because each gesture can be characterized by a unique direction. Thus, EMG samples or data points that belong to the same gesture show a similar cosine distance between each other than data points that belong to a different gesture.

The K-means clustering technique is performed on the pre-processed training data set using the cosine distance as a similarity metric, excluding the data points corresponding to rest or neutral positions/gestures. After the K-means clustering technique is performed, the centroid of each cluster is stored or recorded to determine the directions of the feature space corresponding to each gesture.

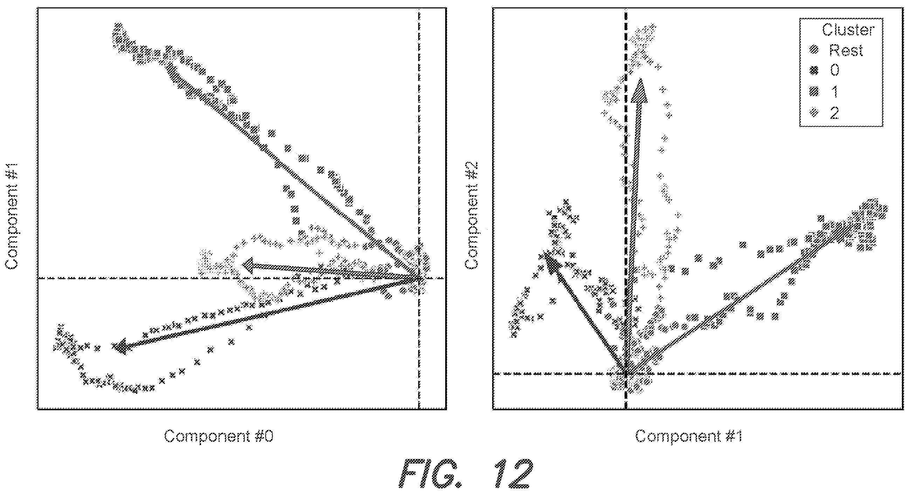

Clusters that share the same direction in the feature space may be effectively identified in part because they are represented as a single cluster. Thereafter, $K$ directions or vectors $v_\kappa$ can be determined (one vector $v_\kappa$ per gesture as shown in FIG. 12, for example).

$$v_\kappa \text{ with } v_\kappa \in [1 : K]$$

where $K$ is the number of distinct gestures identified in the training phase.

Accordingly, for a given vector $u$ of class $y$, class $\hat{y}$ can be determined by:

$$\hat{y} = argmin_k \left( 1 - \frac{(v_k, u)}{\|v_k\| \|u\|} \right)$$

the $\hat{f}$ of force $f$ (i.e., force applied by the user during performance of a given gesture) is given by:

$$\hat{f} = \frac{(v_k, u)}{\|v_k\|^2}$$

FIG. 12 illustrates an example of a resulting plot after the application of the K-means clustering technique to the training data set on the three PCA principal components associated with gestures G1, G2, and G3. As shown, the different non-overlapping directions associated with each of the three clusters can be identified. Each gesture spans a unique direction in the feature space. If a gesture engages a set of muscles, increasing or decreasing the force applied while maintaining the gesture uniformly increases or decreases the contraction of each muscle in the engaged set of muscles. Accordingly, each arrow represents a gesture vector that conveys properties of the identified gesture including direction and force scale (e.g., a range of force values that the user can apply at the time of replicating the gesture or subsequently performing the gesture during the classification phase). A force level applied while performing a particular gesture may be defined by the magnitude of the gesture vector in a determined direction. In some embodiments, a gesture vector associated with a gesture represents a categorical representation of the gesture in the classification model.

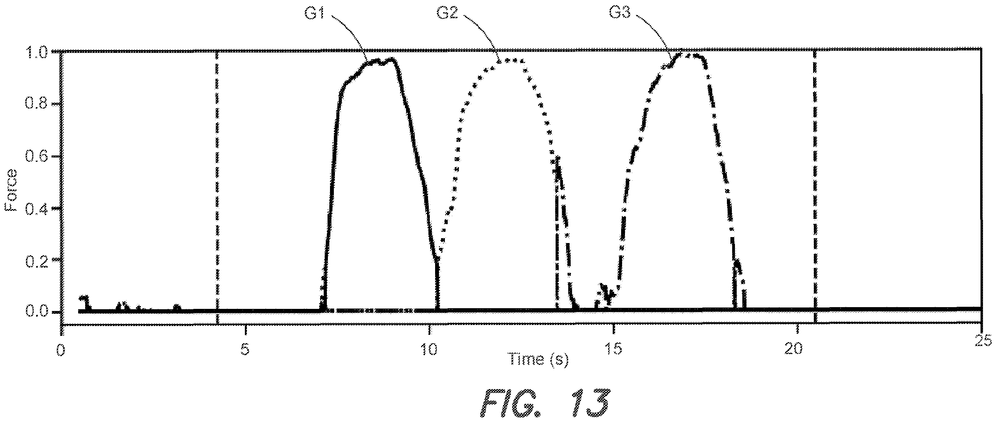

FIG. 13 illustrates the computed force associated with each of the gestures performed by the user during the training phase. In some embodiments, the computed force may be represented as a function of the Maximum Voluntary Contraction (MVC) for each of the three distinct gestures.

*Example technique for recognizing a gesture based on the trained classification model(s) Gesture Recognition Phase*

After computing the direction and average magnitude corresponding to each of the gestures performed by the user during the training phase as discussed above, gesture classifications can be effectively determined for unseen gesture vectors. An unseen gesture vector is a vector derived from an unclassified user-defined gesture. As discussed below, unseen gestures can be classified when they correlate to gestures learned during the training phase and properties of such unseen gesture vector can be inferred including the force applied by the user while performing the unseen gesture. In some embodiments, the gesture vector for the unseen gesture may be generated in a manner similar to the generation of gesture vectors during the training phase.

Given an unseen gesture vector, a gesture can be inferred or classified based on a similarity metric (e.g., the cosine of the angle) between the unseen gesture vector and a set of gesture vectors produced during the training phase of the system. Each gesture vector in the set of gesture vectors corresponds to a gesture learned by the model during the training phase. For example, a match between an unseen gesture vector and a learned gesture vector can be inferred by selecting a learned gesture vector from the set of learned gesture vectors having the minimum cosine distance with respect to the unseen gesture vector. The force of the unseen gesture vector can be inferred by calculating the relative magnitude of the unseen gesture vector projected to the selected learned gesture vector (e.g., the learned gesture vector showing the smallest cosine distance with respect to the unseen gesture vector). Thus, the relative magnitude of the unseen gesture vector corresponds to the value of the scalar product between the unseen gesture vector and the selected learned gesture vector normalized by the magnitude of the selected learned gesture vector.

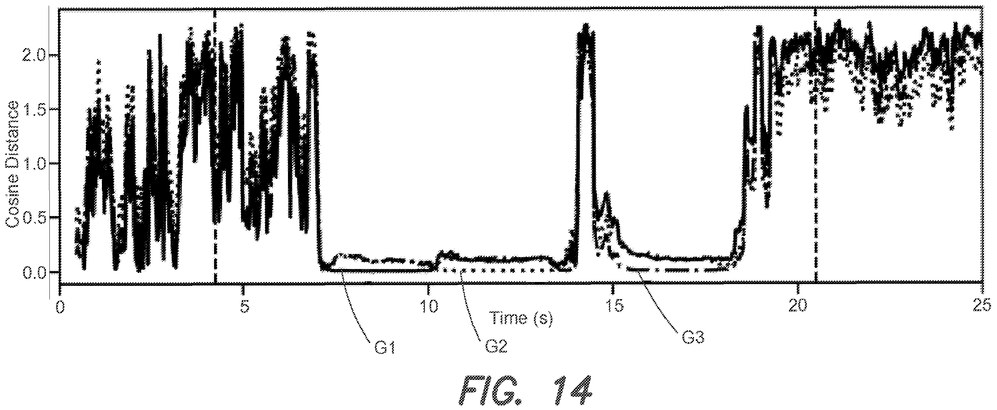

Accordingly, unseen gesture vectors computed from subsequent user-performed gestures (after the training phase) can be classified, in some instances, based on their cosine distance. FIG. 14 shows the cosine distance between a learned gesture vector and an unseen gesture vector. The cosine distance between an unseen gesture vector and a learned gesture vector is closer to zero when the unseen gesture vector correlates to the learned gesture vector and diverges from zero when the unseen gesture vector does not correlate to a learned gesture vector. For example, FIG. 14 shows the cosine distances of three different unseen gesture vectors. In this instance, each of the three unseen gesture vectors matches a distinct learned gesture G1, G2, and G3.

In some other instances, an unseen gesture vector can correlate to a rest or neutral position and thus may be classified as a rest or neutral gesture. An unseen gesture vector can be classified as a rest or neutral gesture by determining whether the unseen gesture vector correlates to EMG signals taken while the user was in a rest or neutral position during the training phase. For example, if none of the distances between an unseen gesture vector and a learned gesture vector are lower than a predetermined threshold (e.g., 0.25 radians), it can be inferred that the unseen gesture vector corresponds to a rest or neutral position. Otherwise, the unseen gesture vector can be classified as a learned gesture vector that exhibits the minimum cosine distance with respect to the unseen gesture vector.

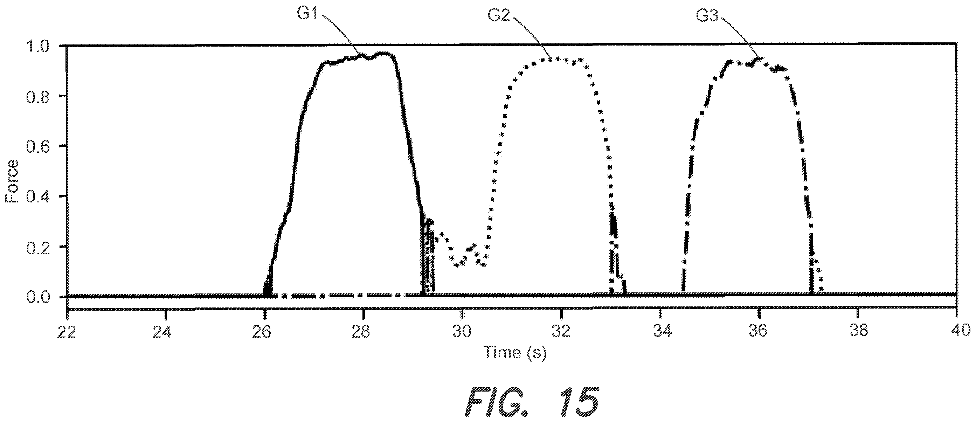

As discussed above, the force associated with an unseen gesture vector can be inferred by computing the relative magnitude of the unseen gesture vector with respect to a learned gesture vector predicted to be correlated with the unseen gesture vector. FIG. 15 illustrates the forces inferred for each of the three identified gesture vectors.

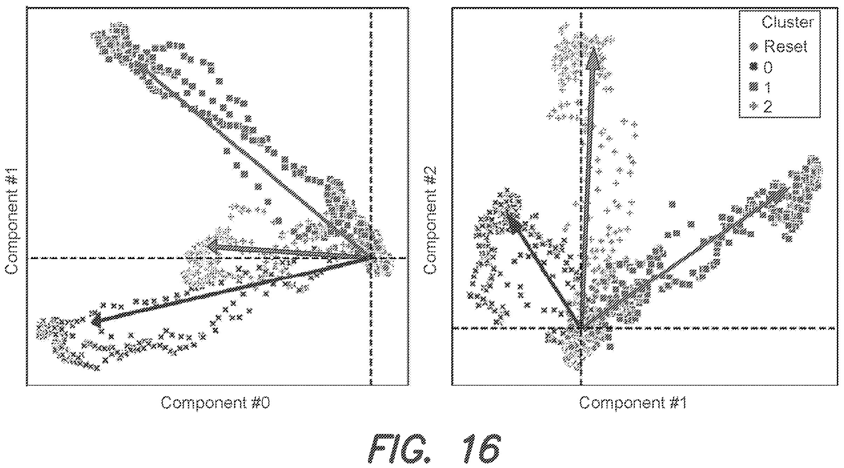

FIG. 16 illustrates the data maps on the PCA space of the unseen gesture vectors. It is appreciated that the directions of the learned gesture vectors illustrated in FIG. 12 remain strong predictive features even though the features were extracted from a single act of the gesture during the training phase.

*Example use case with wearable system*

A user may wear the wearable system (e.g., wearable device depicted in FIG. 2A) having sixteen neuromuscular sensors. The user may perform K number of gestures, where K may be equal to one or any other number of gestures. The user may perform the gesture(s) for a certain period of time changing the force applied while performing each of the gesture(s). A classification model may be trained via an unsupervised machine learning approach to identify the performed gestures and generate a categorical representation of each of the identified gestures. The categorical representation may capture properties associated with the identified gesture (e.g., gesture type, an amount of force applied during performance of the gesture, etc.). The learned gesture(s) and/or forces may be mapped to a command/-control signal such that each time the user performs a learned gesture(s), a control/command signal may be generated by the system. It will be appreciated that the training and use is not limited to the wearable system comprising an armband, and techniques described herein can be implemented with EMG sensors and/or other sensor arrangements different from the armband.

In some embodiments, the wearable system may be configured to generate one or more control signals when the user performs a user-defined gesture. Such a control signal may activate/deactivate compute devices, control objects in virtual environments, control objects in augmented reality environments, control IoT devices, and other suitable systems and/or devices. In some instances, a single gesture may be configured to generate different signals based on the force a user applies during performance of the gesture. For example, a fist gesture performed by the user using a force below a threshold corresponding to half of the user's Maximum Voluntary Contraction (MVC) may cause the system to generate a signal to activate an electrical motor connected to a curtain or blind system causing the motor to close the curtains or blinds. Likewise, if the user performs a fist gesture applying a force above or equal to the aforementioned threshold then, the system may generate a second signal configured to turn off the lights of the room in which the user is located. As another example, a gesture may be configured to control a signal such that the force applied during performance of the gesture is proportional to a property of the signal e.g., voltage, or other signal generated in an augmented or virtual reality environment. As yet another example, a gesture may be configured to control a dimmer or potentiometer to regulate the intensity of a light in a room to be proportional to the force the user applies during performance of the gesture.

The above-described embodiments can be implemented in any of numerous ways. For example, the embodiments may be implemented using hardware, software or a combination thereof. When implemented in software, the software code can be executed on any suitable processor or collection of processors, whether provided in a single computer or distributed among multiple computers. It should be appreciated that any component or collection of components that perform the functions described above can be genetically considered as one or more controllers that control the above-discussed functions. The one or more controllers can be implemented in numerous ways, such as with dedicated hardware or with one or more processors programmed using microcode or software to perform the functions recited above.

In this respect, it should be appreciated that one implementation of the embodiments of the present invention comprises at least one non-transitory computer-readable storage medium (e.g., a computer memory, a portable memory, a compact disk, etc.) encoded with a computer program (i.e., a plurality of instructions), which, when executed on a processor, performs the above-discussed functions of the embodiments of the present invention. The computer-readable storage medium can be transportable such that the program stored thereon can be loaded onto any computer resource to implement the aspects of the present invention discussed herein. In addition, it should be appreciated that the reference to a computer program which, when executed, performs the above-discussed functions, is not limited to an application program running on a host computer. Rather, the term computer program is used herein in a generic sense to reference any type of computer code (e.g., software or microcode) that can be employed to program a processor to implement the above-discussed aspects of the present invention.

Various aspects of the present invention may be used alone, in combination, or in a variety of arrangements not specifically discussed in the embodiments described in the foregoing and are therefore not limited in their application to the details and arrangement of components set forth in the foregoing description or illustrated in the drawings. For example, aspects described in one embodiment may be combined in any manner with aspects described in other embodiments.

Also, embodiments of the invention may be implemented as one or more methods, of which an example has been provided. The acts performed as part of the method(s) may be ordered in any suitable way. Accordingly, embodiments may be constructed in which acts are performed in an order different than illustrated, which may include performing some acts simultaneously, even though shown as sequential acts in illustrative embodiments.

Use of ordinal terms such as "first", "second", "third", etc., in the claims to modify a claim element does not by itself connote any priority, precedence, or order of one claim element over another or the temporal order in which acts of a method are performed. Such terms are used merely as labels to distinguish one claim element having a certain name from another element having a same name (but for use of the ordinal term).

The phraseology and terminology used herein is for the purpose of description and should not be regarded as limiting. The use of "including," "comprising," "having," "containing", "involving", and variations thereof, is meant to encompass the items listed thereafter and additional items.

Having described several embodiments of the invention in detail, various modifications and improvements will readily occur to those skilled in the art. Such modifications and improvements are intended to be within the scope of the invention. Accordingly, the foregoing description is by way of example only, and is not intended as limiting. The invention is limited only as defined by the following claims.

**Claims**

1. An apparatus, comprising:

   a processor (104);
   a plurality of neuromuscular sensors (102, 210) coupled to the processor (104); and
   a memory storing instructions which, when executed by the processor (104), cause the processor (104) to:

   receive, via the plurality of neuromuscular sensors (102, 210), a first plurality of neuromuscular signals from a user as the user performs a first single act of a gesture (G1, G2, G3) while changing an amount of force applied during performance of the gesture (G1, G2, G3);
   train a classification model (106) using training data generated based on the first plurality of neuromuscular signals, the training data comprising data indicative of changes in the amount of force applied during performance of the gesture (G1, G2, G3), wherein training the classification model (106) comprises:

   deriving one or more values from the first plurality of neuromuscular signals, the one or more values indicative of distinctive features of the gesture (G1, G2, G3); and
   generating a first categorical representation of the gesture (G1, G2, G3) in the classification model (106) based on the one or more values derived from the first plurality of neuromuscular signals, wherein the first categorical representation characterizes the gesture (G1, G2, G3) that was performed using different amounts of force, and wherein different amounts of force detected from the neuromuscular signals are associated with different command signals capable of being sent to one or more connected devices;
   receive, via the plurality of neuromuscular sensors (102, 210), a second plurality of neuromuscular signals from the user as the user performs a second single act of the gesture (G1, G2, G3); and
   determine that the user performed the second single act of the gesture (G1, G2, G3) based on the classification model (106) and the second plurality of neuromuscular signals;
   wherein the instructions, when executed by the processor (104), further cause the processor (104) to:

   in response to a determination that the at least one value indicative of a force applied by the user during performance of the second single act of the gesture (G1, G2, G3) exceeds a predetermined force threshold value, generate a first command signal to be communicated to the one or more connected devices remote from the apparatus; and
   in response to a determination that the at least one value indicative of the force applied by the user during performance of the second single act of the gesture (G1, G2, G3) does not exceed the predetermined force threshold value, generate a second command signal to be communicated to the one or more connected devices, wherein the first command signal is different than the second command signal; and
   wherein the categorical representation of the gesture (G1, G2, G3) in the classification model (106) is generated using an unsupervised machine learning technique.

2. The apparatus of claim 1, wherein the categorical representation of the gesture (G1, G2, G3) includes a force scale indicative of force values applied during performance of the gesture (G1, G2, G3).

3. The apparatus of claim 1, wherein the classification model (106) is trained in near real-time.

4. The apparatus of claim 1, wherein the plurality of neuromuscular sensors (102, 210) are arranged on a wearable device (220, 310).

5. The apparatus of claim 1, wherein the instructions, when executed by the processor (104), further cause the processor (104) to:
determine at least one value indicative of a force applied by the user during performance of the second single act of the gesture (G1, G2, G3).

6. The apparatus of claim 1, wherein determining that the user performed the second single act of the gesture (G1, G2, G3) comprises:

deriving one or more second values from the second plurality of neuromuscular signals;
generating a second categorical representation of the gesture (G1, G2, G3) based on the derived one or more second values; and
determining that the user performed the second single act of the gesture (G1, G2, G3) based on a similarity metric computed between the first categorical representation of the gesture (G1, G2, G3) and the second categorical representation of the gesture (G1, G2, G3).

7. The apparatus of claim 1, wherein the instructions, when executed by the processor (104), further cause the processor (104) to:
determine an estimate of a force applied by the user during performance of the second single act of the gesture (G1, G2, G3) based on the categorical representation of the gesture (G1, G2, G3).

8. The apparatus of claim 1, and any one of:

a) wherein the instructions, when executed by the processor (104), further cause the processor (104) to:

compute, based on the categorical representation of the gesture (G1, G2, G3), a sequence of values, each value from the sequence of values indicative of force applied by the user during performance of the second single act of the gesture (G1, G2, G3), the sequence of values indicative of a change in force applied by the user during performance of the second single act of the gesture (G1, G2, G3); and
generate at least one command signal to be communicated to a device, wherein the at least one command signal is indicative of the change in force; or

b) wherein the instructions, when executed by the processor (104), further cause the processor (104) to:

in response to the determination that the user performed the second single act of the gesture (G1, G2, G3), generate a command signal to be communicated to a device remote from the apparatus, the command signal configured to change an appearance of a graphical object displayed by the device; or
c) wherein the instructions, when executed by the processor (104), further cause the processor (104) to:

in response to the determination that the user performed the second single act of the gesture (G1, G2, G3), generate a command signal to be communicated to a device remote from the apparatus, the command signal configured to change a position of a graphical object displayed by the device; or
d) wherein the instructions, when executed by the processor (104), further cause the processor (104) to:

generate a command signal to be communicated to a device remote from the apparatus, wherein the command signal is indicative of a number of times the user has performed the gesture (G1, G2, G3).

9. A method, comprising:

receiving, at a processor (104) of a wearable device (220, 310), a first plurality of neuromuscular signals from a plurality of neuromuscular sensors (102, 210) included in the wearable device (220, 310), the plurality of neuromuscular signals corresponding to neuromuscular signals sampled from a user as the user performs a first single act of a gesture (G1, G2, G3) while changing an amount of force applied during performance of the gesture (G1, G2, G3);
training, via an unsupervised machine learning technique, a classification model (106) using training data generated based on the first plurality of neuromuscular signals, the training data comprising data indicative of changes in the amount of force applied during performance of the gesture (G1, G2, G3),, the classification model comprising a first categorical representation of the gesture (G1, G2, G3), wherein the first categorical representation characterizes the gesture (G1, G2, G3) that was performed using different amounts of force, and wherein different amounts of force detected from the neuromuscular signals are associated with different command signals capable of being sent to one or more connected devices;
determining, based on the categorical representation of the gesture (G1, G2, G3), whether the user has performed a subsequent single act of the gesture (G1, G2, G3);

determining at least one force value corresponding to a force applied by the user during performance of the subsequent single act of the gesture (G1, G2, G3); and

generating a command signal to be communicated to a device in response to a determination that the user has performed the subsequent single act of the gesture (G1, G2, G3), wherein the command signal is indicative of the gesture (G1, G2, G3) and the at least one force value applied during performance of the gesture (G1, G2, G3);

wherein the method further comprises storing, in a memory, instructions which when executed by the processor (104), cause the processor (104) to:

in response to a determination that the at least one value indicative of a force applied by the user during performance of the second single act of the gesture (G1, G2, G3) exceeds a predetermined force threshold value, generate a first command signal to be communicated to the one or more connected devices remote from the apparatus; and

in response to a determination that the at least one value indicative of the force applied by the user during performance of the second single act of the gesture (G1, G2, G3) does not exceed the predetermined force threshold value, generate a second command signal to be communicated to the one or more connected devices, wherein the first command signal is different than the second command signal; and

wherein the categorical representation of the gesture (G1, G2, G3) in the classification model (106) is generated using an unsupervised machine learning technique.

10. The method of claim 9, and any one of:

a) wherein the classification model (106) is trained in near real-time, and training the classification model (106) via the unsupervised machine learning technique comprises: generating the categorical representation of the gesture (G1, G2, G3) in the classification model (106) at least based on the plurality of neuromuscular signals, wherein the categorical representation includes a modeled force scale to determine one or more force values applied during performance of the single act of the gesture; or

b) wherein the method further comprises: retraining the classification model (106), via the unsupervised machine learning technique, to determine whether the user performs a single act of a second gesture (G1, G2, G3), wherein the first gesture (G1, G2, G3) is different than the second gesture (G1, G2, G3), and the retraining comprises:

generating a categorical representation of the second gesture (G1, G2, G3) in the classification model (106) at least based on a second plurality of neuromuscular signals, the categorical representation of the second gesture including a modeled force scale to determine one or more force values applied during performance of the single act of the second gesture (G1, G2, G3); and determining, based on the classification model (106), whether a third plurality of neuromuscular signals correspond to a single act of the first gesture (G1, G2, G3) or to a single act of the second gesture (G1, G2, G3); or

c) wherein the command signal causes the device to execute an operation using the at least one force value as a parameter of the operation.

**Patentansprüche**

1. Eine Vorrichtung, beinhaltend:

einen Prozessor (104);
eine Vielzahl von neuromuskulären Sensoren (102, 210), die mit dem Prozessor (104) gekoppelt sind; und
einen Speicher, der Anweisungen speichert, die, wenn sie durch den Prozessor (104) ausgeführt werden, den Prozessor (104) zu Folgendem veranlassen:

Empfangen, über die Vielzahl von neuromuskulären Sensoren (102, 210), einer ersten Vielzahl von neuromuskulären Signalen von einem Benutzer, wenn der Benutzer eine erste einzelne Aktion einer Geste (G1, G2, G3) durchführt, während er eine Menge an Kraft, die während der Durchführung der Geste (G1, G2, G3) angewendet wird, ändert;
Trainieren eines Klassifizierungsmodells (106) unter Verwendung von Trainingsdaten, die basierend auf der ersten Vielzahl von neuromuskulären Signalen erzeugt werden, wobei die Trainingsdaten Daten beinhalten, die Änderungen der Menge an Kraft, die während der Durchführung der Geste (G1, G2, G3) angewendet wird, angeben, wobei das Trainieren des Klassifizierungsmodells (106) Folgendes beinhaltet:

Ableiten eines oder mehrerer Werte aus der ersten Vielzahl von neuromuskulären Signalen, wobei der eine oder die mehreren Werte kennzeichnende Merkmale der Geste (G1, G2, G3) angeben; und
Erzeugen einer ersten kategorischen Darstellung der Geste (G1, G2, G3) in dem Klassifizierungsmodell (106) basierend auf dem einen oder den mehreren Werten, die aus der ersten Vielzahl von neuromuskulären Signalen abgeleitet werden, wobei die erste kategorische Darstellung die Geste (G1, G2, G3) charakterisiert, die unter Verwendung unterschiedlicher Mengen an Kraft durchgeführt wurde, und wobei unterschiedliche Mengen an Kraft, die aus den neuromuskulären Signalen detektiert werden, mit unterschiedlichen Befehlssignalen assoziiert werden, die an ein oder mehrere verbundene Geräte gesendet werden können;
Empfangen, über die Vielzahl von neuromuskulären Sensoren (102, 210), einer zweiten Vielzahl von neuromuskulären Signalen von dem Benutzer, wenn der Benutzer eine zweite einzelne Aktion der Geste (G1, G2, G3) durchführt; und
Bestimmen, dass der Benutzer die zweite einzelne Aktion der Geste (G1, G2, G3) durchgeführt hat, basierend auf dem Klassifizierungsmodell (106) und der zweiten Vielzahl von neuromuskulären Signalen;
wobei die Anweisungen, wenn sie durch den Prozessor (104) ausgeführt werden, den Prozessor (104) ferner zu Folgendem veranlassen:

als Reaktion auf eine Bestimmung, dass der mindestens eine Wert, der eine Kraft angibt, die von dem Benutzer während der Durchführung der zweiten einzelnen Aktion der Geste (G1, G2, G3) angewendet wird, einen vorgegebenen Kraftschwellenwert übersteigt, Erzeugen eines ersten Befehlssignals, das an das eine oder die mehreren verbundenen Geräte, die sich von der Vorrichtung entfernt befinden, übertragen werden soll; und
als Reaktion auf eine Bestimmung, dass der mindestens eine Wert, der die Kraft angibt, die von dem Benutzer während der Durchführung der zweiten einzelnen Aktion der Geste (G1, G3, G3) angewendet wird, den vorgegebenen Kraftschwellenwert nicht übersteigt, Erzeugen eines zweiten Befehlssignals, das an das eine oder die mehreren verbundenen Geräte übertragen werden soll, wobei sich das erste Befehlssignal von dem zweiten Befehlssignals unterscheidet; und
wobei die kategorische Darstellung der Geste (G1, G2, G3) in dem Klassifizierungsmodell (106) unter Verwendung einer unüberwachten maschinellen Lerntechnik erzeugt wird.

2. Vorrichtung gemäß Anspruch 1, wobei die kategorische Darstellung der Geste (G1, G2, G3) eine Kraftskala umfasst, die Kraftwerte angibt, die während der Durchführung der Geste (G1, G2, G3) angewendet werden.

3. Vorrichtung gemäß Anspruch 1, wobei das Klassifizierungsmodell (106) nahezu in Echtzeit trainiert wird.

4. Vorrichtung gemäß Anspruch 1, wobei die Vielzahl von neuromuskulären Sensoren (102, 210) auf einem tragbaren Gerät (220, 310) angeordnet sind.

5. Vorrichtung gemäß Anspruch 1, wobei die Anweisungen, wenn sie durch den Prozessor (104) ausgeführt werden, den Prozessor (104) ferner zu Folgendem veranlassen:
Bestimmen mindestens eines Wertes, der eine Kraft angibt, die von dem Benutzer während der Durchführung der zweiten einzelnen Aktion der Geste (G1, G2, G3) angewendet wird.

6. Vorrichtung gemäß Anspruch 1, wobei das Bestimmen, dass der Benutzer die zweite einzelne Aktion der Geste (G1, G2, G3) durchgeführt hat, Folgendes beinhaltet:

Ableiten eines oder mehrerer zweiter Werte aus der zweiten Vielzahl von neuromuskulären Signalen;
Erzeugen einer zweiten kategorischen Darstellung der Geste (G1, G2, G3) basierend auf dem abgeleiteten einen oder den abgeleiteten mehreren zweiten Werten; und Bestimmen, dass der Benutzer die zweite einzelne Aktion der Geste (G1, G2, G3) durchgeführt hat, basierend auf einer Ähnlichkeitsmetrik, die zwischen der ersten kategorischen Darstellung der Geste (G1, G2, G3) und der zweiten kategorischen Darstellung der Geste (G1, G2, G3) berechnet wird.

7. Vorrichtung gemäß Anspruch 1, wobei die Anweisungen, wenn sie durch den Prozessor (104) ausgeführt werden, den Prozessor (104) ferner zu Folgendem veranlassen:
Bestimmen einer Schätzung einer Kraft, die von dem Benutzer während der Durchführung der zweiten einzelnen Aktion der Geste (G1, G2, G3) angewendet wird, basierend auf der kategorischen Darstellung der Geste (G1, G2, G3).

8. Vorrichtung gemäß Anspruch 1 und ein Beliebiges von Folgendem:

a) wobei die Anweisungen, wenn sie durch den Prozessor (104) ausgeführt werden, den Prozessor (104) ferner zu Folgendem veranlassen:

Berechnen, basierend auf der kategorischen Darstellung der Geste (G1, G2, G3), einer Sequenz von Werten, wobei jeder Wert aus der Sequenz von Werten eine Kraft angibt, die von dem Benutzer während der Durchführung der zweiten einzelnen Aktion der Geste (G1, G2, G3) angewendet wird, wobei die Sequenz von Werten eine Änderung der Kraft angibt, die von dem Benutzer während der Durchführung der zweiten einzelnen Aktion der Geste (G1, G2, G3) angewendet wird; und
Erzeugen mindestens eines Befehlssignals, das an ein Gerät übertragen werden soll, wobei das mindestens eine Befehlssignal die Änderung der Kraft angibt;

oder
b) wobei die Anweisungen, wenn sie durch den Prozessor (104) ausgeführt werden, den Prozessor (104) ferner zu Folgendem veranlassen:
als Reaktion auf die Bestimmung, dass der Benutzer die zweite einzelne Aktion der Geste (G1, G2, G3) durchgeführt hat, Erzeugen eines Befehlssignals, das an ein Gerät übertragen werden soll, das sich von der Vorrichtung entfernt befindet, wobei das Befehlssignal konfiguriert ist, um ein Erscheinungsbild eines von dem Gerät angezeigten graphischen Objekts zu ändern; oder
c) wobei die Anweisungen, wenn sie durch den Prozessor (104) ausgeführt werden, den Prozessor (104) ferner zu Folgendem veranlassen:
als Reaktion auf die Bestimmung, dass der Benutzer die zweite einzelne Aktion der Geste (G1, G2, G3) durchgeführt hat, Erzeugen eines Befehlssignals, das an ein Gerät übertragen werden soll, das sich von der Vorrichtung entfernt befindet, wobei das Befehlssignal konfiguriert ist, um eine Position eines von dem Gerät angezeigten graphischen Objekts zu ändern; oder
d) wobei die Anweisungen, wenn sie durch den Prozessor (104) ausgeführt werden, den Prozessor (104) ferner zu Folgendem veranlassen:
Erzeugen eines Befehlssignals, das an ein Gerät übertragen werden soll, das sich von der Vorrichtung entfernt befindet, wobei das Befehlssignal angibt, wie oft der Benutzer die Geste (G1, G2, G3) durchgeführt hat.

9. Ein Verfahren, beinhaltend:

Empfangen, an einem Prozessor (104) eines tragbaren Geräts (220, 310), einer ersten Vielzahl von neuromuskulären Signalen von einer Vielzahl von neuromuskulären Sensoren (102, 210), die in dem tragbaren Gerät (220, 310) umfasst sind, wobei die Vielzahl von neuromuskulären Signalen neuromuskulären Signalen entsprechen, die von einem Benutzer abgetastet werden, wenn der Benutzer eine erste einzelne Aktion einer Geste (G1, G2, G3) durchführt, während er eine Menge an Kraft, die während der Durchführung der Geste (G1, G2, G3) angewendet wird, ändert;
Trainieren, über eine unüberwachte maschinelle Lerntechnik, eines Klassifizierungsmodells (106) unter Verwendung von Trainingsdaten, die basierend auf der ersten Vielzahl von neuromuskulären Signalen erzeugt werden, wobei die Trainingsdaten Daten beinhalten, die Änderungen der Menge an Kraft, die während der Durchführung der Geste (G1, G2, G3) angewendet wird, angeben, wobei das Klassifizierungsmodell eine erste kategorische Darstellung der Geste (G1, G2, G3) beinhaltet, wobei die erste kategorische Darstellung die Geste (G1, G2, G3) charakterisiert, die unter Verwendung unterschiedlicher Mengen an Kraft durchgeführt wurde, und wobei unterschiedliche Mengen an Kraft, die aus den neuromuskulären Signalen detektiert werden, mit unterschiedlichen Befehlssignalen assoziiert werden, die an ein oder mehrere verbundene Geräte gesendet werden können;
Bestimmen, basierend auf der kategorischen Darstellung der Geste (G1, G2, G3), ob der Benutzer eine nachfolgende einzelne Aktion der Geste (G1, G2, G3) durchgeführt hat;
Bestimmen mindestens eines Kraftwertes, der einer Kraft entspricht, die von dem Benutzer während der Durchführung der nachfolgenden einzelnen Aktion der Geste (G1, G2, G3) angewendet wird; und

Erzeugen eines Befehlssignals, das als Reaktion auf eine Bestimmung, dass der Benutzer die nachfolgende einzelne Aktion der Geste (G1, G2, G3) durchgeführt hat, an ein Gerät übertragen werden soll, wobei das Befehlssignal die Geste (G1, G2, G3) und den mindestens einen Kraftwert, der während der Durchführung der Geste (G1, G2, G3) angewendet wird, angibt; wobei das Verfahren ferner das Speichern, in einem Speicher, von Anweisungen beinhaltet, die, wenn sie durch den Prozessor (104) ausgeführt werden, den Prozessor (104) zu Folgendem veranlassen:

> als Reaktion auf eine Bestimmung, dass der mindestens eine Wert, der eine Kraft angibt, die von dem Benutzer während der Durchführung der zweiten einzelnen Aktion der Geste (G1, G2, G3) angewendet wird, einen vorgegebenen Kraftschwellenwert übersteigt, Erzeugen eines ersten Befehlssignals, das an das eine oder die mehreren verbundenen Geräte, die sich von der Vorrichtung entfernt befinden, übertragen werden soll; und
>
> als Reaktion auf eine Bestimmung, dass der mindestens eine Wert, der die Kraft angibt, die von dem Benutzer während der Durchführung der zweiten einzelnen Aktion der Geste (G1, G3, G3) angewendet wird, den vorgegebenen Kraftschwellenwert nicht übersteigt, Erzeugen eines zweiten Befehlssignals, das an das eine oder die mehreren verbundenen Geräte übertragen werden soll, wobei sich das erste Befehlssignal von dem zweiten Befehlssignals unterscheidet; und
>
> wobei die kategorische Darstellung der Geste (G1, G2, G3) in dem Klassifizierungsmodell (106) unter Verwendung einer unüberwachten maschinellen Lerntechnik erzeugt wird.

**10.** Verfahren gemäß Anspruch 9 und ein Beliebiges von Folgendem:

> a) wobei das Klassifizierungsmodell (106) nahezu in Echtzeit trainiert wird und das Trainieren des Klassifizierungsmodells (106) über die unüberwachte maschinelle Lerntechnik Folgendes beinhaltet:
> Erzeugen der kategorischen Darstellung der Geste (G1, G2, G3) in dem Klassifizierungsmodell (106) mindestens basierend auf der Vielzahl von neuromuskulären Signalen, wobei die kategorische Darstellung eine modellierte Kraftskala umfasst, um einen oder mehrere Kraftwerte, die während der Durchführung der einzelnen Aktion der Geste angewendet werden, zu bestimmen; oder

b) wobei das Verfahren ferner Folgendes beinhaltet:
Neutrainieren des Klassifizierungsmodells (106) über die unüberwachte maschinelle Lerntechnik, um zu bestimmen, ob der Benutzer eine einzelne Aktion einer zweiten Geste (G1, G2, G3) durchführt, wobei sich die erste Geste (G1, G2, G3) von der zweiten Geste (G1, G2, G3) unterscheidet und das Neutrainieren Folgendes beinhaltet:

> Erzeugen einer kategorischen Darstellung der zweiten Geste (G1, G2, G3) in dem Klassifizierungsmodell (106) mindestens basierend auf einer zweiten Vielzahl von neuromuskulären Signalen, wobei die kategorische Darstellung der zweiten Geste eine modellierte Kraftskala umfasst, um einen oder mehrere Kraftwerte, die während der Durchführung der einzelnen Aktion der zweiten Geste (G1, G2, G3) angewendet werden, zu bestimmen; und
> Bestimmen, basierend auf dem Klassifizierungsmodell (106), ob eine dritte Vielzahl von neuromuskulären Signalen einer einzelnen Aktion der ersten Geste (G1, G2, G3) oder einer einzelnen Aktion der zweiten Geste (G1, G2, G3) entsprechen; oder

c) wobei das Befehlssignal das Gerät veranlasst, einen Vorgang unter Verwendung des mindestens einen Kraftwertes als einen Parameter des Vorgangs auszuführen.

**Revendications**

**1.** Un appareil, comprenant :

> un processeur (104) ;
> une pluralité de capteurs neuromusculaires (102, 210) couplés au processeur (104) ; et
> une mémoire stockant des instructions qui, lorsqu'elles sont exécutées par le processeur (104), amènent le processeur (104) :
> à recevoir, par l'intermédiaire de la pluralité de capteurs neuromusculaires (102, 210), une première pluralité de signaux neuromusculaires en provenance d'un utilisateur alors que l'utilisateur réalise un premier seul acte d'un geste (G1, G2, G3) tout en changeant une quantité de force appliquée durant la réalisation du geste (G1, G2, G3) ; à entraîner un modèle de classification (106) en utilisant des données d'entraînement générées sur la base de la première pluralité de signaux neuromusculaires, les données d'entraînement comprenant des données indicatives de changements dans la quantité de force appliquée durant la réalisation du geste (G1, G2, G3), l'entraînement du modèle de classification (106) comprenant :

la dérivation d'une ou de plusieurs valeurs de la première pluralité de signaux neuromusculaires, les une ou plusieurs valeurs étant indicatives de caractéristiques distinctives du geste (G1, G2, G3) ; et

la génération d'une première représentation catégorielle du geste (G1, G2, G3) dans le modèle de classification (106) sur la base des une ou plusieurs valeurs dérivées de la première pluralité de signaux neuromusculaires, la première représentation catégorielle caractérisant le geste (G1, G2, G3) qui a été réalisé en utilisant différentes quantités de force, et différentes quantités de force détectées à partir des signaux neuromusculaires étant associées à différents signaux de commande en mesure d'être envoyés à un ou plusieurs dispositifs connectés ;

à recevoir, par l'intermédiaire de la pluralité de capteurs neuromusculaires (102, 210), une deuxième pluralité de signaux neuromusculaires en provenance de l'utilisateur alors que l'utilisateur réalise un deuxième seul acte du geste (G1, G2, G3) ; et

à déterminer que l'utilisateur a réalisé le deuxième seul acte du geste (G1, G2, G3) sur la base du modèle de classification (106) et de la deuxième pluralité de signaux neuromusculaires ;

dans lequel les instructions, lorsqu'elles sont exécutées par le processeur (104), amènent en outre le processeur (104) :

en réponse à une détermination du fait que l'au moins une valeur indicative d'une force appliquée par l'utilisateur durant la réalisation du deuxième seul acte du geste (G1, G2, G3) dépasse une valeur seuil de force prédéterminée, à générer un premier signal de commande devant être communiqué aux un ou plusieurs dispositifs connectés à distance de l'appareil ; et

en réponse à une détermination du fait que l'au moins une valeur indicative de la force appliquée par l'utilisateur durant la réalisation du deuxième seul acte du geste (G1, G2, G3) ne dépasse pas la valeur seuil de force prédéterminée, à générer un deuxième signal de commande devant être communiqué aux un ou plusieurs dispositifs connectés, le premier signal de commande étant différent du deuxième signal de commande ; et

dans lequel la représentation catégorielle du geste (G1, G2, G3) dans le modèle de classification (106) est générée en utilisant une technique d'apprentissage machine non supervisé.

2. L'appareil de la revendication 1, dans lequel la représentation catégorielle du geste (G1, G2, G3) inclut une échelle de force indicative de valeurs de force appliquées durant la réalisation du geste (G1, G2, G3).

3. L'appareil de la revendication 1, dans lequel le modèle de classification (106) est entraîné en temps quasi réel.

4. L'appareil de la revendication 1, dans lequel la pluralité de capteurs neuromusculaires (102, 210) sont agencés sur un dispositif apte à être porté sur soi (220, 310).

5. L'appareil de la revendication 1, dans lequel les instructions, lorsqu'elles sont exécutées par le processeur (104), amènent en outre le processeur (104) :
à déterminer au moins une valeur indicative d'une force appliquée par l'utilisateur durant la réalisation du deuxième seul acte du geste (G1, G2, G3).

6. L'appareil de la revendication 1, dans lequel la détermination du fait que l'utilisateur a réalisé le deuxième seul acte du geste (G1, G2, G3) comprend :

la dérivation d'une ou de plusieurs deuxièmes valeurs de la deuxième pluralité de signaux neuromusculaires ;

la génération d'une deuxième représentation catégorielle du geste (G1, G2, G3) sur la base des une ou plusieurs deuxièmes valeurs dérivées ; et

la détermination que l'utilisateur a réalisé le deuxième seul acte du geste (G1, G2, G3) sur la base d'une mesure de similarité calculée informatiquement entre la première représentation catégorielle du geste (G1, G2, G3) et la deuxième représentation catégorielle du geste (G1, G2, G3).

7. L'appareil de la revendication 1, dans lequel les instructions, lorsqu'elles sont exécutées par le processeur (104), amènent en outre le processeur (104) :

à déterminer une estimation d'une force appliquée par l'utilisateur durant la réalisation du deuxième seul acte du geste (G1, G2, G3) sur la base de la représentation catégorielle du geste (G1, G2, G3).

8. L'appareil de la revendication 1, et n'importe lequel des points parmi :

    a) dans lequel les instructions, lorsqu'elles sont exécutées par le processeur (104), amènent en outre le processeur (104) :

        à calculer informatiquement, sur la base de la représentation catégorielle du geste (G1, G2, G3), une séquence de valeurs, chaque valeur de la séquence de valeurs étant indicative de la force appliquée par l'utilisateur durant la réalisation du deuxième seul acte du geste (G1, G2, G3), la séquence de valeurs étant indicative d'un changement dans la force appliquée par l'utilisateur durant la réalisation du deuxième seul acte du geste (G1, G2, G3) ; et
        à générer au moins un signal de commande devant être communiqué à un dispositif, l'au moins un signal de commande étant indicatif du changement dans la force ; ou

    b) dans lequel les instructions, lorsqu'elles sont exécutées par le processeur (104), amènent en outre le processeur (104) :
    en réponse à la détermination du fait que l'utilisateur a réalisé le deuxième seul acte du geste (G1, G2, G3), à générer un signal de commande devant être communiqué à un dispositif à distance de l'appareil, le signal de commande étant configuré pour changer une apparence d'un objet graphique affiché par le dispositif ; ou
    c) dans lequel les instructions, lorsqu'elles sont exécutées par le processeur (104), amènent en outre le processeur (104) :
    en réponse à la détermination du fait que l'utilisateur a réalisé le deuxième seul acte du geste (G1, G2, G3), à générer un signal de commande devant être communiqué à un dispositif à distance de l'appareil, le signal de commande étant configuré pour changer une position d'un objet graphique affiché par le dispositif ; ou
    d) dans lequel les instructions, lorsqu'elles sont exécutées par le processeur (104), amènent en outre le processeur (104) :
    à générer un signal de commande devant être communiqué à un dispositif à distance de l'appareil, le signal de commande étant indicatif d'un nombre de fois que l'utilisateur a réalisé le geste (G1, G2, G3).

9. Un procédé, comprenant :

la réception, au niveau d'un processeur (104) d'un dispositif apte à être porté sur soi (220, 310), d'une première pluralité de signaux neuromusculaires en provenance d'une pluralité de capteurs neuromusculaires (102, 210) inclus dans le dispositif apte à être porté sur soi (220, 310), la pluralité de signaux neuromusculaires correspondant à des signaux neuromusculaires échantillonnés à partir d'un utilisateur alors que l'utilisateur réalise un premier seul acte d'un geste (G1, G2, G3) tout en changeant une quantité de force appliquée durant la réalisation du geste (G1, G2, G3) ;
l'entraînement, par l'intermédiaire d'une technique d'apprentissage machine non supervisé, d'un modèle de classification (106) en utilisant des données d'entraînement générées sur la base de la première pluralité de signaux neuromusculaires, les données d'entraînement comprenant des données indicatives de changements dans la quantité de force appliquée durant la réalisation du geste (G1, G2, G3), le modèle de classification comprenant une première représentation catégorielle du geste (G1, G2, G3), la première représentation catégorielle caractérisant le geste (G1, G2, G3) qui a été réalisé en utilisant différentes quantités de force, et différentes quantités de force détectées à partir des signaux neuromusculaires étant associées à différents signaux de commande en mesure d'être envoyés à un ou plusieurs dispositifs connectés ;
la détermination, sur la base de la représentation catégorielle du geste (G1, G2, G3), quant à savoir si l'utilisateur a réalisé un seul acte subséquent du geste (G1, G2, G3) ;
la détermination d'au moins une valeur de force correspondant à une force appliquée par l'utilisateur durant la réalisation du seul acte subséquent du geste (G1, G2, G3) ; et
la génération d'un signal de commande devant être communiqué à un dispositif en réponse à une détermination du fait que l'utilisateur a réalisé le seul acte subséquent du geste (G1, G2, G3), le signal de commande étant indicatif du geste (G1, G2, G3) et de l'au moins une valeur de force appliquée durant la réalisation du geste (G1, G2, G3) ;
le procédé comprenant en outre le stockage, dans une mémoire, d'instructions qui, lorsqu'elles sont exécutées par le processeur (104), amènent le processeur (104) :

    en réponse à une détermination du fait que l'au moins une valeur indicative d'une force appliquée par l'utilisateur durant la réalisation du deuxième seul acte du geste (G1, G2, G3) dépasse une valeur seuil de force prédéterminée, à générer un premier signal de commande devant être communiqué aux un ou plusieurs dispositifs connectés à distance de l'appareil ; et

en réponse à une détermination du fait que l'au moins une valeur indicative de la force appliquée par l'utilisateur durant la réalisation du deuxième seul acte du geste (G1, G2, G3) ne dépasse pas la valeur seuil de force prédéterminée, à générer un deuxième signal de commande devant être communiqué aux un ou plusieurs dispositifs connectés, le premier signal de commande étant différent du deuxième signal de commande ; et

dans lequel la représentation catégorielle du geste (G1, G2, G3) dans le modèle de classification (106) est générée en utilisant une technique d'apprentissage machine non supervisé.

10. Le procédé de la revendication 9, et n'importe lequel des points parmi :

a) dans lequel le modèle de classification (106) est entraîné en temps quasi réel, et l'entraînement du modèle de classification (106) par l'intermédiaire de la technique d'apprentissage machine non supervisé comprend :

la génération de la représentation catégorielle du geste (G1, G2, G3) dans le modèle de classification (106) au moins sur la base de la pluralité de signaux neuromusculaires, la représentation catégorielle incluant une échelle de force modélisée afin de déterminer une ou plusieurs valeurs de force appliquées durant la réalisation du seul acte du geste ; ou

b) le procédé comprenant en outre :

le ré-entraînement du modèle de classification (106), par l'intermédiaire de la technique d'apprentissage machine non supervisé, afin de déterminer si l'utilisateur réalise un seul acte d'un deuxième geste (G1, G2, G3), le premier geste (G1, G2, G3) étant différent du deuxième geste (G1, G2, G3), et le ré-entraînement comprend :

la génération d'une représentation catégorielle du deuxième geste (G1, G2, G3) dans le modèle de classification (106) au moins sur la base d'une deuxième pluralité de signaux neuromusculaires, la représentation catégorielle du deuxième geste incluant une échelle de force modélisée afin de déterminer une ou plusieurs valeurs de force appliquées durant la réalisation du seul acte du deuxième geste (G1, G2, G3) ; et

la détermination, sur la base du modèle de classification (106), quant à savoir si une troisième pluralité de signaux neuromusculaires correspondent à un seul acte du premier geste (G1, G2, G3) ou à un seul acte du deuxième geste (G1, G2, G3) ; ou

c) dans lequel le signal de commande amène le dispositif à exécuter une opération en utilisant l'au moins une valeur de force comme paramètre de l'opération.

**FIG. 1**

220

230

210

FIG. 2A

220

230

210

FIG. 2B

FIG. 3A

FIG. 3B

EP 3 897 890 B1

400

402
Obtain Sensor Signals

404
Process Sensor Signals

406
Generate Training Data Set

408
Train Statistical Model Based on the Training Data Set

410
Store Trained Statistical Model

FIG. 4

FIG. 5

FIG. 6A

FIG. 6B

700

702

Input Sensor Data to
Classification Model(s)

704

Identify Gesture Being
Performed Based on the
Classification Model(s)

706

Generate Control Signal(s)
Based on Identified Gesture

FIG. 7

FIG. 8

FIG. 9

*FIG. 10*

Tangent Space

PCA Space

FIG. 11

*FIG. 12*

*FIG. 13*

EP 3 897 890 B1

*FIG. 14*

*FIG. 15*

*FIG. 16*

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015323998 A1